(19) Europäisches Patentamt
European Patent Office
Office européen des brevets

(11) **EP 1 895 782 A2**

(12) **EUROPÄISCHE PATENTANMELDUNG**

(43) Veröffentlichungstag:
**05.03.2008 Patentblatt 2008/10**

(51) Int Cl.:
***H04N 13/00*** *(2006.01)*

(21) Anmeldenummer: **07016788.7**

(22) Anmeldetag: **28.08.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **30.08.2006  DE 202006013325 U
11.09.2006  DE 202006013777 U**

(71) Anmelder: **Grasnick, Armin
07749 Jena (DE)**

(72) Erfinder: **Grasnick, Armin
07749 Jena (DE)**

(74) Vertreter: **Kruspig, Volkmar et al
Meissner, Bolte & Partner GbR
Geschwister-Scholl-Strasse 15
07545 Gera (DE)**

(54) **Autostereoskopische Anzeigevorrichtung**

(57)    Die Erfindung betrifft eine autostereoskopische Anzeigevorrichtung aus einem Displayarray (3) mit einer definierten Pixelanodnung und einer vor und/oder hinter dem Displayarray angeordneten opaken Parallax-Barriere mit transparenten Barrierespalten. Sie zeichnet sich dadurch aus, dass der jeweilige Barrierespalt aus einer Reihe von Barriereelementen zusammengesetzt ist, wobei das einzelne Barriereelement ein transparentes oder opakes Strukturelement (6) und eine dem jeweiligen Strukturelement zugeordnete holografische Struktur, insbesondere eine Zonenplatte (9a), aufweist. Bei einer Ausführungsform ist die Anzeigevorrichtung zwischen einer zweidimensionalen und einer dreidimensionalen Bildanzeige umschaltbar, wobei die Parallax-Barriere aus einer zwischen einer rückwärtigen Lichtquelle (10) und einer mindestens teilweise transparenten oder transluzenten Displayfläche (17) angeordneten Anordnung aus einer Parallax-Zonenfläche (11) mit einer Gesamtheit von über die Zonenfläche gemäß einer Anordnungsvorschrift verteilten Zonenplatten und einer in Richtung der Displayfläche gelegenen Feld-Barriere (13) besteht.

Fig. 45

EP 1 895 782 A2

**Beschreibung**

Die Erfindung betrifft eine autostereoskopische Anzeigevorrichtung nach dem Oberbegriff des Anspruchs 1.

Autostereoskopische Anzeigevorrichtungen, insbesondere Flach- oder Bildschirmdisplays, ermöglichen eine stereoskopische Darstellung eines dreidimensionalen Objektes, bei dem für die Betrachtung keine zusätzlichen Hilfsmittel, wie beispielsweise Brillen und dergleichen Mittel, notwendig sind.

Bei Bildschirm- bzw. Flachdisplays mit einer definierten Anordnung von Bildpunkten, d.h. Pixeln bzw. Subpixeln, sind arrayinduzierte Anordnungen aus einer Parallax-Barriere im Gebrauch, die vor oder hinter dem eigentlichen Display angeordnet ist. Die Parallax-Barriere ist in diesem Zusammenhang ein einfaches optisches System, das in Verbindung mit der definierten Pixelanordnung, zum Beispiel einem LC-Display, einem Plasma-Display, einem OLED-Display oder auch einem herkömmlichen Kathodenstrahldisplay, einer Ansteuereinheit, beispielsweise einem Computer, und entsprechend aufbereiteten Bilddaten einem vor der Anzeigevorrichtung befindlichen Betrachter einen autostereoskopischen Bildeindruck vermittelt. Bei der Parallax-Barriere wird die Betrachtung bestimmter Bilddaten durch eine geeignete Anordnung transparenter und lichtundurchlässiger, d.h. opaker, Bereiche ermöglicht oder verwehrt. Diese transparent/opake Struktur bildet die Parallax-Struktur der Parallax-Barriere und ist auf das Display entsprechend angepasst.

Die Zuordnung der Parallax-Struktur zu den entsprechenden Bilddaten auf dem Display hängt von der Position des Betrachters ab. Ein autostereoskopischer Bildeindruck kommt dabei dann zustande, wenn mindestens zwei Bilddaten bei einer Betrachterposition binokular und stereoskopisch wahrgenommen werden können. Dies wird durch die Parallax-Barriere bewirkt. Sie kann sich sowohl vor, als auch hinter dem Anzeigesystem befinden. Die letztere Ausführungsform bietet sich vorzugsweise für transparente bzw. transluzente Displayformen an.

Die Charakterisierung derartiger Anordnungen als "arrayinduzierte Anordnungen" ergibt sich daraus, weil die Gestaltung der Parallax-Barriere und darüber hinaus der gesamten Anzeigevorrichtung letztlich auf dem Array der einzelnen Pixel und Subpixel in dem Display aufbaut und von diesem Array bestimmt ist. Eine Beschreibung des Arrays zieht folgerichtig eine davon abhängende Beschreibung der gesamten Anzeigevorrichtung und ebenfalls der Parallax-Barriere nach sich, sie "induziert" diese gleichsam.

Parallax-Barrieren wurden zum Beispiel durch Jacobson und Berthier 1896, Frederick E. Ives 1903, Estenave 1906 und Clarence W. Kanolt 1915 grundlegend im Zusammenhang mit Drucktechniken und Filmen beschrieben. Die gegenwärtig verwendeten Parallax-Barrieren in der Displaytechnik stellen Transpositionen der aus diesen Bereichen gebräuchlichen Barriereanordnungen dar, die zum Beispiel auf Flachdisplays angewendet werden. S. P. Ivanof und Herbert E Ives haben hierzu in der Mitte des 20. Jahrhunderts eine Reihe von Verbesserungen vorgeschlagen. Eine umfassende "Theory of Parallax Barrier" wurde durch S. H. Kaplan im Jahre 1952 veröffentlicht, wobei darin alle derzeitigen Barriere-Technologien im wesentlichen vollständig offenbart sind. Eine recht umfangreiche Beschreibung von 3D-Display-Technologien mit einer Literaturliste weiterer Veröffentlichungen findet sich derzeit bei Holliman unter der URL

http://www.dur.ac.uk/n.s.holliman/Presentations/3dv3-0.pdf.

Derartige Parallaxbarrieren können auch elektrisch schaltbar ausgebildet sein. Die Druckschrift EP 1 662 808 A1 beschreibt beispielsweise ein Display, dessen Parallaxbarriere aus einer flüssigkristallinen Schicht besteht, deren Zellen einzeln angesprochen werden können und von einem transparenten in einen opaken Zustand und umgekehrt geschaltet werden können. Damit kann die Konfiguration der Parallaxbarriere im Rahmen der einzeln schaltbaren Punkte in der schaltbaren Anordnung beliebig verändert werden.

Die Druckschrift EP 1 566 683 A1 gibt mögliche Verteilungen von Einzelbildern mit einem vor den Bildpixeln in der Displayfläche angeordneten streifenförmigen Linsenfeld als stereoskopischem optischen Element an. Derartige Linsenfelder sind aufwändig in der Herstellung. Daher wird oft auf Parallax-Barrieren zurückgegriffen, die als Maske vor dem Displayfeld angeordnet sind oder die Beleuchtung des Displayfeldes so abschirmen, dass ein Betrachter binokular verschiedene Bilder wahrnehmen und einen räumlichen Bildeindruck gewinnen kann.

Ein wesentliches Problem bei den derzeitigen Formen der sowohl schaltbaren als auch nicht schaltbaren Parallax-Barrieren ist einerseits der nicht unwesentliche Intensitätsverlust des Displays, bei dem proportional zur Ansichtenzahl auf der Anzeigevorrichtung mindestens 1/2 der Anfangsintensität des Displays durch die Barrierestruktur ausgeblendet wird, und die exakte Positionierung der transparenten und opaken Bereiche auf der Fläche der Barrierenfläche. Diese entsprechen bei den derzeit gebräuchlichen Barrieresystemen im wesentlichen einer auf das Barrieresystem projizierten Struktur der Pixel auf dem Array des Displays, wobei insbesondere die im wesentlichen rechteckige oder quadratische Form der Pixel und Subpixel auf die Barrierestruktur übertragen wird. Ein Beispiel hierfür sind Parallax-Barrieren der Firmen Sanyo, Sharp oder 4D-Vision.

Die dabei entstehenden Parallax-Barrieren bestehen aus vertikalen Anordnungen aus Streifen oder schräg verlaufenden, treppenförmige Anordnungen aus transparenten bzw. opaken Bereichen, bei denen durch die eckige und gestufte Form Überlagerungserscheinungen, vor allem Moiré-Muster, aber auch andere Interferenz- oder Beugungserscheinungen auftreten können, durch die sich die Bildqualität oft drastisch verschlechtert.

Ein weiterer Nachteil der gegenwärtig gebräuchlichen Barrieresysteme besteht darin, dass bei der eckigen Anordnung transparenter Strukturen sowohl in horizontaler als auch in vertikaler Richtung auf eine sehr präzise und verdrehungsfreie Positionierung der Strukturen zu achten ist. Dies bringt eine entsprechend aufwändige Montage der Parallax-Barriere mit sich, die nicht immer zufrieden stellend gelöst werden kann.

Es besteht somit die Aufgabe, eine autostereoskopische Anzeigevorrichtung aus einem Bildschirmarray mit einer definierten Pixelanordnung und einer vor und/oder hinter dem Bildschirmarray angeordneten Parallax-Barriere anzugeben, bei der die Positionierung der opaken bzw. transparenten Barrierestrukturen und damit der gesamten Parallax-Barriere einfach auszuführen ist, einfach realisiert und vorab bestimmt werden kann und bei der die Qualität der Bilddarstellung durch die eingesetzte Parallax-Barriere nur minimal beeinträchtigt wird. Die gesuchte Parallax-Barriere soll einen möglichst geringen Intensitätsverlust aufweisen.

Die Aufgabe wird mit einer autostereoskopischen Anzeigevorrichtung mit den Merkmalen des Anspruchs 1 gelöst. Die Unteransprüche enthalten zweckmäßige bzw. vorteilhafte Ausführungsformen der erfindungsgemäßen Vorrichtung.

Zur Lösung der Aufgabe wird von einer autostereoskopischen Anzeigevorrichtung aus einem Displayarray mit einer definierten Pixelanodnung und einer vor und/oder hinter dem Displayarray angeordneten opaken Parallax-Barriere mit Barrierespalten ausgegangen.

Erfindungsgemäß ist die autostereoskopische Anzeigevorrichtung dadurch gekennzeichnet, dass der jeweilige Barrierespalt aus einer Reihe von transparenten oder opaken Barriereelementen zusammengesetzt ist, wobei das einzelne Barriereelement ein transparentes Strukturelement und eine dem jeweiligen Strukturelement zugeordnete holografische Struktur, insbesondere eine Zonenplatte, aufweist. Die Zonenplatte bewirkt infolge der Lichtbeugung eine Fokussierung des Lichtes. Die Parallax-Barriere realisiert damit auf eine weitgehend einfachere Weise die Vorteile eines sehr viel teureren Linsenfeldes, ist aber in einer beträchtlich einfacheren und damit kostengünstigeren Weise herstellbar.

Bevorzugt wird durch die Strukturelemente eine Barrieretextur aus einer Reihe von schräg über die Barrierefläche verlaufenden, glatt begrenzten Barrierelinien ausgebildet.

Die Strukturelemente bilden bei dieser bevorzugten Ausführungsform der Parallax-Barriere grundlegende elementare transparente oder opake Grundformen, aus denen die Barrierestrukturen zusammengesetzt sind. Diese sind über die Barrierenfläche so verteilt, dass deren Aneinanderreihung eine Reihe von schräg über die Barrierenfläche verlaufenden Barrierelinien ausbildet. Durch die Gestaltung der Strukturelemente verlaufen die Barrierelinien nicht stufenförmig oder gezackt, wie dies bei herkömmlichen Parallax-Barrieren mit rechteckigen opaken oder transparenten Löchern oder transparenten Bereichen der Fall ist, sondern die Barrierelinien sind als mehr oder weniger stark gegenüber der Vertikalen geneigte Linien bzw. Streifen ohne eine Stufen- oder Zackenstruktur ausgebildet. Dadurch entfallen die dadurch sonst störenden Moire-Effekte, Überlagerungen und Beugungserscheinungen an den sonst vorhandenen Zakken- bzw. Stufenkanten. Die durch diese Linien gebildete Barrieretextur besteht somit aus einer Gesamtheit derartiger parallel zueinander verlaufender Barrierelinien, die über der gesamten Barrierefläche verteilt ist.

Durch die besondere Gestaltung der schräg verlaufenden Barriereelemente ist nur eine präzise und verdrehungsfreie Montage in horizontaler Richtung notwendig, wodurch sich die Positionierung der Parallax-Barriere beträchtlich vereinfacht.

Grundsätzlich ist das Aussehen der genannten Barrieretextur durch die Position und Anordnung der einzelnen Strukturelemente bestimmt. Bei einer vorteilhaften Ausgestaltung der Erfindung ist die Lage jedes einzelnen Strukturelementes durch ein über die Barrierefläche verteiltes virtuelles Raster aus einzelnen Verankerungs-Boxen bestimmt, wobei ein Schwerpunkt jeweils einer Verankerungsbox den Ort des Strukturelementes auf der Barrierefläche bestimmt.

Die Verankerungs-Boxen und das durch diese Formen ausgebildete Raster erfüllen somit zwei Funktionen. Zum einen gibt die Form jeder Verankerungs-Box eine einhüllende Begrenzung jedes Strukturelementes an. Zum anderen ist jede Verankerungs-Box über deren Schwerpunkt adressierbar. Das aus den Verankerungs-Boxen gebildete Raster überdeckt die gesamte Barrierenfläche und kann auf eine zweckmäßige und einfache Weise skaliert und beliebig verzerrt werden, wobei die Lage und die Form der Strukturelemente in einer entsprechenden Weise definiert und festgelegt wird.

Zweckmäßigerweise sind die Verankerungs-Boxen nach einer für eine Bildzuordnungsvorschrift der Pixelanordnung des Displayarrays geeigneten Zuordnungsvorschrift auf der Barrierenfläche angeordnet und mittels eines eine Reihe von geometrische Anzeige- und Betrachtungsparameter beschreibenden Korrekturfaktors skaliert.

Die Orte der einzelnen Strukturelemente und damit die Verläufe der Barrierelinien und somit die Gestalt der Barrieretextur müssen in Hinblick auf die für die Anzeigevorrichtung zu erreichenden Ansichtenzahl und die gegebene Gestaltung des Displayarrays, d.h. die Positionen der Pixel und Subpixel, festgelegt sein. Dabei muss die jeweilige Bildzuordnungsvorschrift der einzelnen darzustellenden Ansichten auf dem Displayarray berücksichtigt und in die Zuordnungsvorschrift für die Positionen der Strukturelemente auf der Barrierenfläche übertragen werden. Die so gegebene Zuordnungsvorschrift dient als Grundlage für die Positionierung der Verankerungs-Boxen des virtuellen Rasters und somit auch für die Gestalt des Rasters selbst. Die Skalierung des Rasters und damit der Verankerungs-Boxen berücksichtigt die für das jeweilige Display gegebenen geometrischen Verhältnisse, beispielsweise einen Abstand zwischen einer Displayschicht und einer Trägerfläche für die Parallax-Barriere, einen Nennabstand für eine Betrachtungsposition und dergleichen Parameter mehr.

Bei einer zweckmäßigen Ausführungsform sind bei der Verteilung der rautenförmigen Strukturelemente bei einer gegebenen Ansichtenzahl folgende Parameter angepasst: eine Additionszahl von Strukturelementen je Spalte, eine Additionszahl von Strukturelementen je Zeile, eine Wiederholungszahl in x-Richtung und eine Wiederholungszahl in y-Richtung.

Die Barrierefläche ist zweckmäßigerweise als ein transparentes Trägersubstrat mit einer auf das Trägersubstrat auflaminierten Barrierefolie ausgebildet. Die Barrierefolie selbst besteht bei einer zweckmäßigen Ausführungsform aus einem belichteten Filmmaterial. Die Barrieretextur ist somit in Form belichteter dunkler opaker - hell transparenter Strukturen ausgebildet.

Die Zonenplatte kann in verschiedenen Ausführungsformen vorliegen. Sie kann als ein Amplitudenhologramm, ein Phasenhologramm oder als eine Kombination aus einem Amplitudenhologramm und einem Phasenhologramm ausgebildet sein.

In einer ersten Ausführungsform ist die Zonenplatte als eine Fresnel-Zonenplatte mit transparenten und opaken Bereichen in einem binären Muster ausgebildet. Bei einer zweiten Ausführungsform ist die Zonenplatte als eine Gabor-Zonenplatte mit transparenten und opaken Bereichen in einem kontinuierlich verlaufenden Muster ausgeführt.

Die Barrierelinien, insbesondere die Strukturelemente, weisen bei einer zweckmäßigen Ausgestaltung an deren Randbereichen einen kontinuierlichen Übergang zwischen einem opaken und einem transparenten Bereich auf. Dadurch können Moire- und andere Überlagerungseffekte minimiert und die Bildqualität erhöht werden.

Die Zonenplatte kann in Abhängigkeit von der Ausführungsform und der zu realisierenden Fokussierung als kreisförmige oder lineare Zonenplatte ausgebildet sein. Bei einer kreisförmigen Zonenplatte erfolgt die Fokussierung des Lichtes in einem Punkt, bei einer linearen Zoneplatte wird eine Fokussierung des Lichtes nur in einer Richtung erreicht. Eine derartige Zonenplatte wirkt wie eine Zylinderlinse.

Die Barrierelinien, insbesondere die Strukturelemente und/oder die jeweilige Zonenplatte, können bei einer zweckmäßigen Ausgestaltung zusätzliche Randabschattungen, Vignettierungen und/oder optische Dichteverläufe aufweisen, wodurch sich die Bildqualität positiv beeinflussen lässt.

Zur Reduzierung von Moiré-Effekten ist bei einer vorteilhaften Ausführungsform die reale Spaltbreite der Barrierelinien im Vergleich zu einem theoretischen Wert etwas vergrößert. Bei einer weiteren vorteilhaften Ausgestaltung ist die reale Spaltbreite der Barrierelinien zur Verbesserung der Kanaltrennung zwischen den Ansichten im Vergleich zu einem theoretischen Wert verringert.

Moiré-Effekte können auch dadurch vermieden werden, indem bei einer weiteren vorteilhaften Ausführungsform die optische Dichte der opaken Abschnitte der Parallax-Barriere zur Verringerung von Moiré-Effekten gegenüber einem theoretischen Wert reduziert ist.

Bei einer vorteilhaften Ausführungsform ist die Anzeigevorrichtung zwischen einer zweidimensionalen und einer dreidimensionalen Bildanzeige umschaltbar ausgeführt. Die Parallax-Barriere besteht in diesem Fall aus einer zwischen einer rückwärtigen Lichtquelle und einer mindestens teilweise transparenten oder transluzenten Displayfläche angeordneten Anordnung aus einer Parallax-Zonenfläche mit einer Gesamtheit von über die Zonenfläche gemäß einer Anordnungsvorschrift verteilten Zonenplatten und einer in Richtung der Displayfläche gelegenen Feld-Barriere. Die Zonenplatten führen dabei die Lichtfokussierung aus, während die Feld-Barriere die abdeckende bzw. maskierende Barrierefläche bilden.

In einer vorteilhaften Ausführung ist die Feld-Barriere als ein schaltbares, insbesondere ein elektrochromes, Element ausgebildet, wobei die Feld-Barriere bei einem ersten Schaltzustand eine Barrierenstruktur aus transparenten und opaken Bereichen zeigt und bei einem zweiten Schaltzustand durchgängig transparent ist. Die Anzeigevorrichtung kann damit entweder für eine autostereoskopische Darstellung oder für eine konventionelle zweidimensionale Darstellung eines Bildes verwendet und entsprechend umgeschaltet werden.

Zusätzlich kann zwischen der Feld-Barriere und der Displayfläche eine lichtstreuende Projektions-Streuplatte angeordnet sein. Diese ist so angeordnet, dass das in der Platte vorhandene Streufeld des Lichtes in seiner Breite annähernd der Spaltbreite der transparenten Bereiche in der Feld-Barriere entspricht. Die Projektions-Streuplatte kann zwischen einem streuenden und einem transparenten Zustand umschaltbar sein.

Zwischen der Feld-Barriere und der Displayfläche ist bei einer vorteilhaften Ausführungsform ein zwischen einem transparenten und einem streuenden Zustand schaltbarer Streulicht-Integrator angeordnet. Dieser generiert an jeder Durchtrittsstelle des Lichtes ein definiertes Helligkeitsfeld.

Die Displayfläche kann auf der Betrachterseite mit einer zur Verbesserung einer Kanaltrennung dienenden, mit Parallax-Barrierestrukturen versehenen Verstärkungsplatte zur Verstärkung der räumlichen Bildwiedergabe ergänzt sein. Die von der Feld-Barriere bzw. der Parallax-Zonenfläche erzeugte Kanaltrennung wird durch dieses Mittel verstärkt.

Bei einer vorteilhaften Ausgestaltung sind die Barrierestrukturen der Verstärkungsplatte als zuschaltbare Elemente, insbesondere schaltbare Linsen, elektrochrome Schichten und/oder flüssigkristalline Barrieren ausgebildet.

Die erfindungsgemäße Anzeigevorrichtung soll nachfolgend anhand von Ausführungsbeispielen in Verbindung mit Figuren näher erläutert werden. Es werden für gleiche bzw. gleich wirkende Teile die selben Bezugszeichen verwendet. Es zeigt:

Fig. 1 eine erläuternde Darstellung zur Definition von Pixelbreite und Pixelhöhe,

Fig. 2 eine erläuternde Darstellung zur Definition eines Subpixels und einer Subpixelbreite,

Fig. 3 eine prinzipielle Darstellung eines Displayarrays mit einer Indizierung der im Array enthaltenen Subpixel,

Fig. 4 eine beispielhafte Darstellung eines Ausschnitts einer Barrierefläche mit Barrierelinien,

Fig. 5 eine beispielhafte Darstellung eines Ausschnitts eines virtuellen Rasters mit Verankerungs-Boxen und beispielhaften, in die Verankerungs-Boxen positionierten rautenförmigen Strukturelementen,

Fig. 6 eine weitere beispielhafte Darstellung des virtuellen Rasters mit rautenförmigen Strukturelementen,

Fig. 7 beispielhafte hexagonale bzw. kreuzförmige Strukturelemente,

Fig. 8 eine schematische Darstellung der geometrischen Verhältnisse im System des Displayarrays, der Parallax-Barriere und der Betrachtungsposition,

Fig. 9 eine schematische Darstellung zur Herleitung des Korrekturfaktors der Barrierestruktur,

Fig. 10 eine Darstellung von Spaltbreite und Spaltpitch der Parallax-Barriere,

Fig. 11 eine kreisförmige 1-Bit Zonenplatte mit sprunghaftem Zonenwechsel,

Fig. 12 eine kreisförmige 8-Bit Zonenplatte mit kontinuierlichem Zonenwechsel,

Fig. 13 eine einfache Barrierestruktur für 5 Ansichten,

Fig. 14 eine Kombination aus kreisförmiger 1-Bit Zonenplatte mit sprunghaftem Zonenwechsel und einer Barrierestruktur für 5 Ansichten,

Fig. 15 eine Kombination aus kreisförmiger 8-Bit Zonenplatte mit kontinuierlichem Zonenwechsel und einer Barrierestruktur für 5 Ansichten,

Fig. 16 eine Kombination aus kreisförmiger 1-Bit Zonenplatte mit sprunghaftem Zonenwechsel und einer Barrierestruktur für 5 Ansichten sowie einem Opazitätsverlauf über dem Barrierespalt,

Fig. 17 eine Kombination aus kreisförmiger 8-Bit Zonenplatte mit kontinuierlichem Zonenwechsel und einer Barrierestruktur für 5 Ansichten sowie einem Opazitätsverlauf über dem Barrierespalt,

Fig. 18 eine Kombination aus kreisförmiger 1-Bit Zonenplatte mit sprunghaftem Zonenwechsel und schräger Barrierestruktur für 5 Ansichten,

Fig. 19 eine Kombination aus kreisförmiger 8-Bit Zonenplatte mit kontinuierlichem Zonenwechsel und schräger Barrierestruktur für 5 Ansichten,

Fig. 20 eine Kombination aus kreisförmiger 1-Bit Zonenplatte mit sprunghaftem Zonenwechsel und schräger Barrierestruktur für 5 Ansichten sowie einem Opazitätsverlauf über dem Barrierespalt,

Fig. 21 eine Kombination aus kreisförmiger 8-Bit Zonenplatte mit kontinuierlichem Zonenwechsel und schräger Barrierestruktur für 5 Ansichten sowie einem Opazitätsverlauf über dem Barrierespalt,

Fig. 22 eine lineare 1-Bit Zonenplatte mit sprunghaftem Zonenwechsel,

Fig. 23 eine lineare 8-Bit Zonenplatte mit kontinuierlichem Zonenwechsel,

Fig. 24 eine Kombination aus linearer 1-Bit Zonenplatte mit sprunghaftem Zonenwechsel und einer Barrierestruktur für 5 Ansichten,

Fig. 25 eine Kombination aus linearer 8-Bit Zonenplatte mit kontinuierlichem Zonenwechsel und einer Barrierestruktur für 5 Ansichten,

Fig. 26 eine Kombination aus linearer 1-Bit Zonenplatte mit sprunghaftem Zonenwechsel und einer Barrierestruktur für 5 Ansichten sowie einem Opazitätsverlauf über dem Barrierespalt,

Fig. 27 eine Kombination aus linearer 8-Bit Zonenplatte mit kontinuierlichem Zonenwechsel und Barrierestruktur für 5 Ansichten sowie einem Opazitätsverlauf über dem Barrierespalt,

Fig. 28 eine schräge lineare 1-Bit Zonenplatte mit sprunghaftem Zonenwechsel,

Fig. 29 eine schräge lineare 8-Bit Zonenplatte mit kontinuierlichem Zonenwechsel,

Fig. 30 eine Kombination aus schräger linearer 1-Bit Zonenplatte mit sprunghaftem Zonenwechsel und gerader Barrierestruktur für 5 Ansichten,

Fig. 31 eine Kombination aus schräger linearer 8-Bit Zonenplatte mit kontinuierlichem Zonenwechsel und gerader Barrierestruktur für 5 Ansichten,

Fig. 32 eine Kombination aus schräger linearer 1-Bit Zonenplatte mit sprunghaftem Zonenwechsel und gerader Barrierestruktur für 5 Ansichten sowie einem Opazitätsverlauf über dem Barrierespalt,

Fig. 33 eine Kombination aus schräger linearer 8-Bit Zonenplatte mit kontinuierlichem Zonenwechsel und gerader Barrierestruktur für 5 Ansichten sowie einem Opazitätsverlauf über dem Barrierespalt,

Fig. 34 eine Kombination aus schräger linearer 1-Bit Zonenplatte mit sprunghaftem Zonenwechsel und schräger Barrierestruktur für 5 Ansichten,

Fig. 35 eine Kombination aus schräger linearer 8-Bit Zonenplatte mit kontinuierlichem Zonenwechsel und schräger Barrierestruktur für 5 Ansichten,

Fig. 36 eine Kombination aus schräger linearer 1-Bit Zonenplatte mit sprunghaftem Zonenwechsel und schräger Barrierestruktur für 5 Ansichten sowie einem Opazitätsverlauf über dem Barrierespalt,

Fig. 37 eine Kombination aus schräger linearer 8-Bit Zonenplatte mit kontinuierlichem Zonenwechsel und schräger Barrierestruktur für 5 Ansichten sowie einem Opazitätsverlauf über dem Barrierespalt,

Fig. 38 eine 1 Bit Vignettierung,

Fig. 39 eine schräge 1 Bit Vignettierung,

Fig. 40 ein 8 Bit Dichteverlauf,

Fig. 41 ein schräger 8 Bit Dichteverlauf,

Fig. 42 eine Kombination aus einer schrägen linearen 1-Bit Zonenplatte mit sprunghaftem Zonenwechsel und einer schrägen Barrierestruktur für 5 Ansichten sowie einer schrägen 1 Bit Vignettierung,

Fig. 43 eine Kombination aus einer schrägen linearen 8-Bit Zonenplatte mit kontinuierlichem Zonenwechsel und einer schrägen Barrierestruktur für 5 Ansichten, einem Verlauf über den Barrierespalt sowie einem schrägen 8 Bit Dichteverlauf,

Fig. 44 eine schematische Anordnung einer zwischen einem zwei- und einem dreidimensionalen Modus umschaltbaren Anzeige,

Fig. 45 eine schematische Anordnung einer zwischen einem zwei- und einem dreidimensionalen Modus umschaltbaren Anzeigevorrichtung im 2D-Modus

Fig. 46 eine schematische Anordnung einer zwischen einem zwei- und einem dreidimensionalen Modus umschaltbaren Anzeigevorrichtung im 3D-Modus.

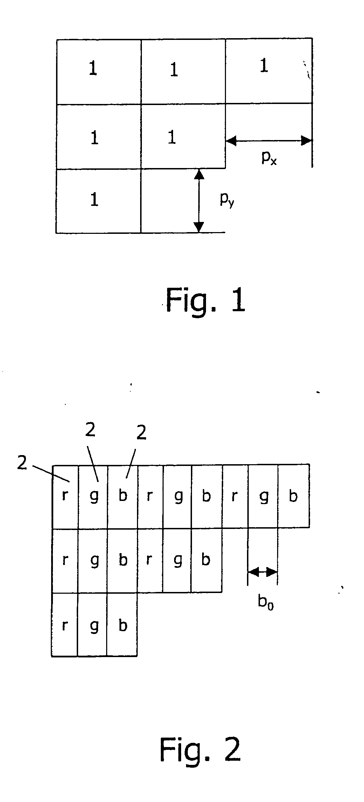

Fig. 1 zeigt erläuternd eine Gruppe schematischer Pixel 1 mit einer horizontalen Pixelbreite $p_x$ und einer vertikalen Pixelhöhe $p_y$. Bei einem Farbdisplay wird der Farbwert jedes Pixels bekanntermaßen durch eine additive Farbenmischung erzeugt. Jedes Pixel ist wie aus Fig. 2 zu entnehmen ist, in drei Subpixel 2 unterteilt, die einen Farbwert Rot r, Grün g bzw. Blau b in unterschiedlichen Helligkeiten ausstrahlen. Diese Subpixel sind einzeln ansteuerbar und bilden somit das elementare Rasterelement der Displayfläche. Die Größe dieses Rasterelements wird durch die Pixelhöhe $p_y$ und durch die Subpixelbreite $b_0$ bestimmt. Dabei spielt die Breite $b_0$ des Subpixels eine besonders wichtige Rolle. Die Subpixel können technisch als Elemente eines LC-Displays, eines Plasmadisplays oder auch als ein Teil eines herkömmlichen Elektronenstrahldisplays ausgeführt sein.

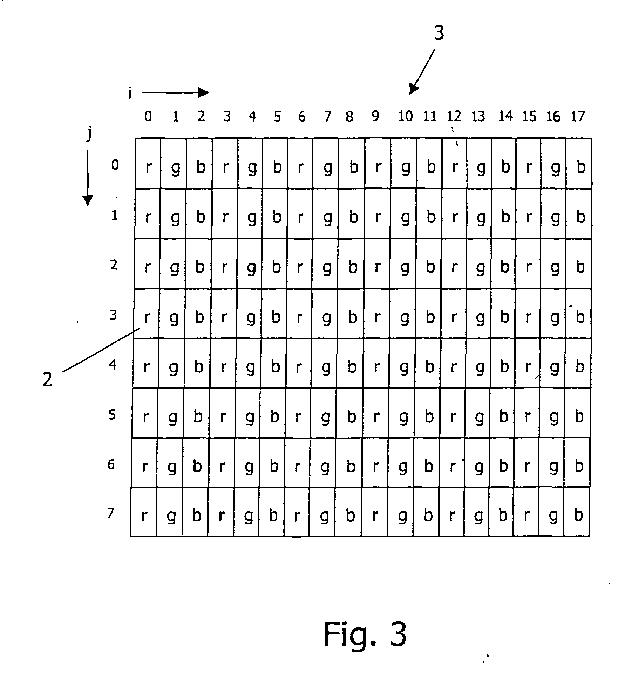

Fig. 3 zeigt einen Ausschnitt eines Displayarrays 3 mit einer Reihe von roten Subpixeln r, grünen Subpixeln g und blauen Subpixeln b. Die Position jedes einzelnen Subpixels des Arrays ist durch eine Indizierung eindeutig bestimmt. Bei dem hier gezeigten Beispiel beginnt eine horizontale Nummerierung i bei einem Wert von i = 0 und endet bei i = 17. Eine vertikale Nummerierung j der Subpixel beginnt bei diesem Beispiel bei j = 0 und läuft bis j = 7. Bei einem $n_x$ x $n_y$ - Array mit $n_x$ Subpixeln in horizontaler und $n_y$ Subpixeln in vertikaler Richtung läuft demzufolge die horizontale Nummerierung der Rasterelemente von i = 0 bis i = $n_x$ - 1 und die vertikale Nummerierung in einer entsprechenden Weise von j = 0 bis j = $n_y$ - 1. Dieses Indexsystem (i; j) beschreibt das Array in einer eindeutigen Weise und bildet die Grundlage für die Gestaltung der Parallax-Barriere.

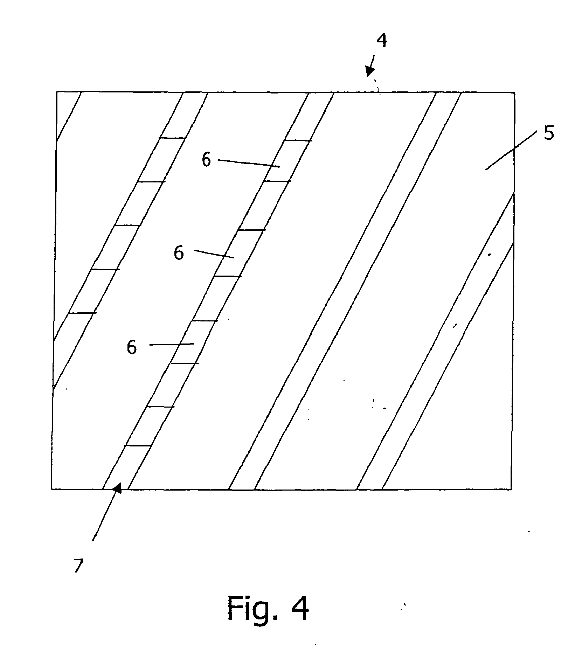

Fig. 4 zeigt eine beispielhafte Parallax-Barriere 4 ausschnittsweise in einer erfindungsgemäßen Ausführungsform. Die Parallax-Barriere weist eine Barrierenfläche 5 mit einer abwechselnd opaken und transparenten Barrieretextur auf. Die einzelnen Elemente der Barrieretextur sind aus einer Reihe rautenförmiger Strukturelemente 6 zusammengesetzt, die entlang von schräg verlaufenden Barrierelinien 7 gruppiert sind. Die Barrierelinien und damit die Strukturelemente können transparent oder opak sein. Die zwischen den Barrierelinien liegenden Bereiche der Barrierenfläche weisen entsprechend kontrastierende Eigenschaften auf. Ohne Beschränkung der Allgemeinheit wird bei den nachfolgenden Ausführungsbeispielen davon ausgegangen, dass die Strukturelemente lichtdurchlässig und auf einer ansonsten opaken Barrierenfläche angeordnet sind.

Die Parallax-Barriere ist beispielsweise in Form eines transparenten Trägers ausgebildet, der eine geringe Streuung aufweist. Hierzu kann zum Beispiel Sicherheitsglas oder EMV-Schutzglas verwendet werden. Auf diesen Träger ist eine Barrierefolie auflaminiert, die zweckmäßigerweise als ein Schwarz-weiß Film ausgebildet ist, der unter Anwendung einer Laserbelichtung mit den entsprechenden Barrieretexturen versehen worden ist. Die Oberfläche des Trägers mit der Barrierefolie wird nachfolgend als Barrierefläche bezeichnet.

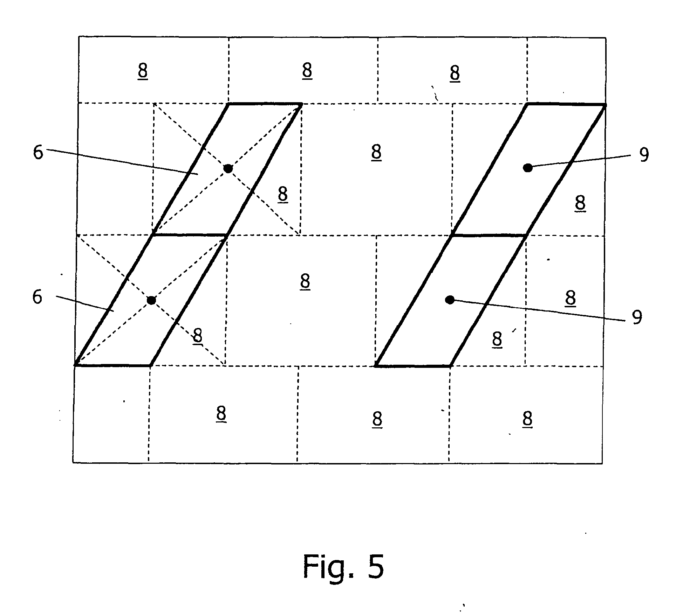

Fig. 5 zeigt eine beispielhafte Anordnung der Strukturelemente in Verbindung mit einer Reihe von Verankerungs-Boxen 8 auf der Barrierefläche. Die Gesamtheit der Verankerungs-Boxen, die auch als "bounding boxes" bezeichnet werden können, bildet ein auf die Barrierefläche übertragenes virtuelles Raster oder Gitter, in welches die Strukturelemente einbeschrieben sind. Bei dem hier gezeigten Beispiel bestehen die Verankerungs-Boxen aus Rechtecken in einer mauerförmigen Anordnung. Deren Schwerpunkte 9 markieren deren Position auf der Barrierefläche. Die Lage wird zweckmäßigerweise durch eine Zuordnungsvorschrift beschrieben, die auf die Zuordnungsvorschrift der Rasterelemente der Displayfläche, d.h. die vorhergehend beschriebene Indizierung der Subpixel und deren geometrische Gestalt rückbezogen ist.

Die Gestalt der Verankerungs-Boxen selbst legt die Form der einbeschriebenen Strukturelemente fest. Entsprechend der Anordnung der Parallax-Barriere und den geometrischen Einsatzbedingungen (vor oder hinter der Displayfläche, dem zweckmäßigen Betrachtungsabstand, der Pixel- bzw. Subpixelgröße, der Entfernung zwischen der Barrierenfläche von der Displayfläche und dem Augenabstand des Betrachters) ergeben sich eine Reihe von Korrekturen, insbesondere Korrekturfaktoren, mit denen das virtuelle Gitter der Verankerungs-Boxen zu skalieren ist. Zusammenfassend ist also festzustellen, dass die Lage der Strukturelemente durch die Schwerpunkte der Verankerungs-Boxen bestimmt wird, während die Gestalt der Strukturelemente, d.h. deren Größe, Neigung, Breite und Form, durch die Skalierung der Verankerungsboxen festgelegt wird.

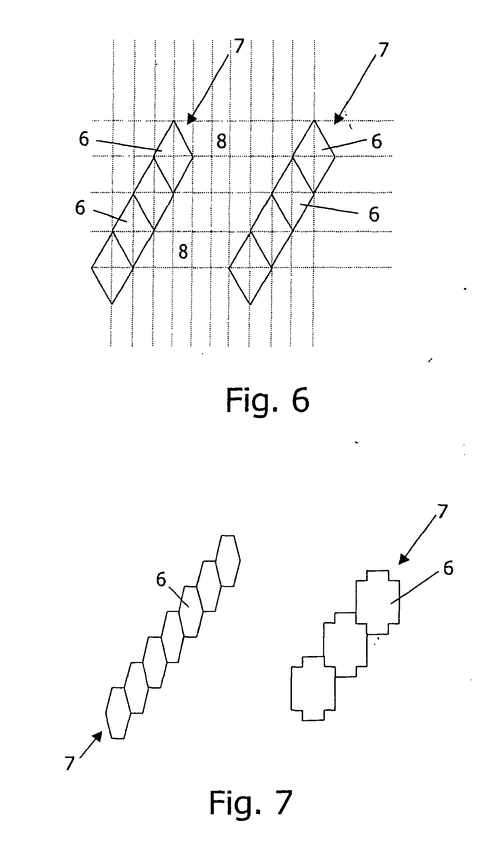

Es ist einsichtig, dass die Strukturelemente variable Innenwinkel aufweisen können und dass auch die Struktur des virtuellen Gitters der Verankerungs-Boxen zweckmäßig abgeändert sein kann. Fig. 6 zeigt ein dementsprechendes Beispiel. Die Verankerungs-Boxen bilden bei diesem Ausführungsbeispiel ein rechteckiges Gitter, während die Strukturelemente als auf ihre Ecken gestellte Rauten ausgebildet sind. Jede der Ecken der hier gezeigten Rauten wird durch einen Gitterpunkt der Verankerungs-Boxen beschrieben und ist somit durch die Struktur des virtuellen Gitters festgelegt. Die Mittelpunkte der Rauten sind ebenfalls durch die virtuellen Gitterpunkte festgelegt. Es ist einsichtig, dass durch eine Skalierung des Gitters sowie durch eine Streckung oder Stauchung des Gitters die Form der Rauten und deren Lage veränderbar ist. Durch einen Vergleich der Darstellung aus Fig. 6 mit der Darstellung aus Fig. 5 und dem Bild aus Fig. 4 wird deutlich, dass sich sowohl durch die Ausführungsform der Strukturelemente aus Fig. 5, als auch durch die Gestaltung der Strukturelemente gemäß Fig. 6 die schrägen Barrierelinien aus Fig. 4 verwirklichen lassen.

Hierzu können ebenso rechteckige, achteckige, sternförmige, elliptische oder auch kreisförmige Strukturelemente verwendet werden. 1-Bit-Bitmap-Texturen oder Kombinationen aus Form und Bitmap-Strukturen, wie beispielsweise Fresnel-Strukturen wie etwa Zonenplatten, Kreise oder Spiralen sind ebenfalls verwendbar und können unterstützend angewendet werden. Eine Verwendung holografischer Objekte als Strukturelement kann ebenso erfolgen.

Im Zusammenhang mit der Darstellung aus Fig. 5 ist darauf hinzuweisen, dass die Strukturelemente prinzipiell jede beliebige geometrische Form annehmen können, wobei bei der Auswahl der Form die dabei entstehende Zweckmäßigkeit der erzeugten Barrierestruktur berücksichtigt werden muss. So zeigt beispielsweise die linke Darstellung aus Fig. 7 eine Anordnung von Strukturelementen in einer hexagonalen Form, während die rechte Darstellung in Fig. 7 Strukturelemente in einer Kreuzform zeigt, die jeweils zweckmäßig aneinander gereiht sind. Die Rautenform der Strukturelemente aus Fig. 6 bzw. die Form der Strukturelemente nach Art eines Parallelogramms nach Fig. 5 erweist sich jedoch in Hinblick auf die anzustrebenden schräg verlaufenden glatten Barrierelinien gemäß Fig. 4 am zweckmäßigsten.

Außerdem ist anzumerken, dass natürlich auch rechteckige bzw. quadratische Strukturelemente verwendet werden können, um vertikale Barrierestrukturen zu erzeugen.

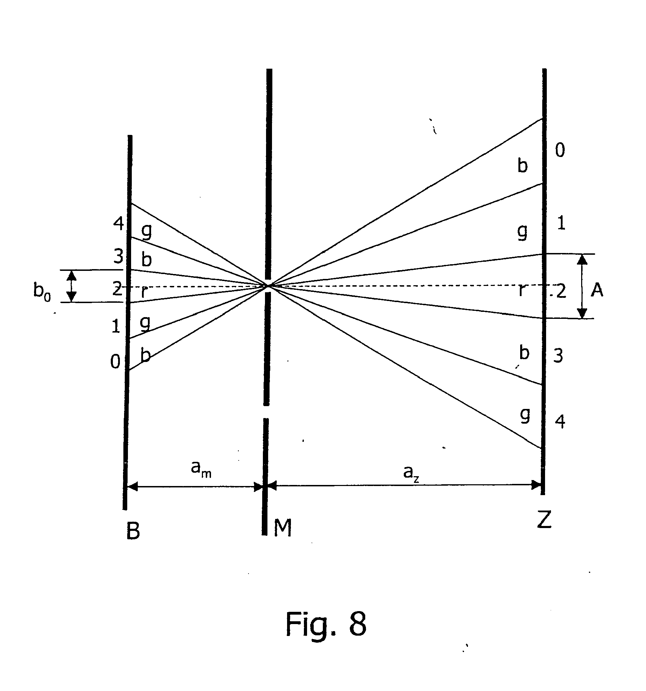

Im Folgenden sollen die Korrektur und die Anpassung der gezeigten Parallax-Barriere auf das jeweilige Display näher erläutert werden. Fig. 8 zeigt hierzu in einer vereinfachten Darstellung die geometrischen Verhältnisse in einer Anzeigevorrichtung mit Parallax-Barriere. Bei dem hier gezeigten Beispiel befindet sich die Parallax-Barriere M zwischen der Displayfläche B und der Betrachtungsebene Z. Die auf der Displayfläche leuchtenden Subpixel werden durch einen Spalt S, d.h. den transparenten Bereich der Parallax-Barriere hindurch, betrachtet. Sofern sich die Parallax-Barriere hinter der Displayfläche befindet und durch eine rückwärtige Lichtquelle hindurch beleuchtet wird, ändern sich die hier in Fig. 8 gezeigten Verhältnisse nicht grundsätzlich. Die auf den Strahlensätzen beruhenden, im folgenden beschriebenen Überlegungen sind auch für eine derartige Konfiguration anwendbar und behalten ihre Gültigkeit.

Bei dem in Fig. 8 gezeigten Beispiel befindet sich die Parallax-Barriere M in einem Abstand $a_m$ vor der Displayfläche B. Der Abstand $a_m$ wird als Maskenweite bezeichnet. Die Betrachtungsebene Z, d.h. die Ebene, in der sich die Augen eines Betrachters befinden, befindet sich in einem Abstand $a_z$ vor der Parallax-Barriere. Dieser Abstand wird als Betrachtungsabstand bezeichnet.

Die Breite eines einzelnen Subpixels $b_0$ wird über den Spalt S der Parallax-Barriere M auf eine Projektionsbreite A in der Betrachtungsebene Z projiziert. Bei kleineren Ansichtenzahlen ist der Wert von A zumeist identisch mit dem durchschnittlichen Augenabstand eines Betrachters. Bei einer Anzeigevorrichtung, die dagegen der Bedingung genügen soll, dass mit dieser eine Vielzahl von Ansichten in einer so genannten "super multiview condition" angezeigt werden sollen, nehmen die Projektionsbreiten Werte an, die in der Regel kleiner als die Eintrittspupille eines Betrachterauges sind.

Der Zusammenhang zwischen der Maskenweite $a_m$, der Breite $b_0$ des Subpixels, der Projektionsbreite A und dem Betrachtungsabstand $a_z$ ist durch den Strahlensatz mit folgender Verhältnisgleichung gegeben:

$$\frac{b_0}{a_m} = \frac{A}{a_z}$$

Bei einem bekannten A, $b_0$ und $a_z$ errechnet sich die Maskenweite durch die Beziehung

$$a_m = \frac{b_0 a_z}{A} \qquad (1)$$

Bei einer Projektionsbreite A = 65 mm, einer Breite des Subpixels $b_0$ = 0,181 mm und einem Betrachtungsabstand $a_z$ = 4500 mm ergibt sich beispielsweise eine Maskenweite von $a_m$ = 12,5 mm. Den gleichen Wert würde man auch erhalten, wenn man die Positionen der Parallax-Barriere und der Displayfläche vertauscht und somit von einer beleuchteten Barriere ausgeht.

Für die Gestaltung der Parallax-Barriere ist die zu realisierende Ansichtenzahl $n_V$ von besonders wichtiger Bedeutung. Eine einzelne stereoskopische Ansicht entspricht dabei einer zweidimensionalen Aufnahme eines Bildmotivs aus einer bestimmten Position. Je größer die Ansichtenzahl ist, umso realistischer ist der durch die Anzeigevorrichtung realisierbare Raumeindruck des angezeigten stereoskopischen Bildes. Je nach der Beschaffenheit der Anzeigevorrichtung werden die Ansichten auf das Array der Displayfläche unter Verwendung einer Reihe von Parametern verteilt. Der Datensatz, der die verschiedenen Ansichten miteinander kombiniert und dessen Informationen auf der Displayfläche angezeigt werden, enthält eine Reihe von Parametern qA, qB, qX und qY, die die Anordnung der Ansichten im Datensatz beschreiben. Diese Parameter können numerische Konstanten, grundsätzlich aber auch zweckmäßige Funktionen sein, die zum Beispiel von den Indizes i und j im Pixelarray abhängen können.

qA gibt dabei die Addition einer Ansicht je Displayspalte, qB die Addition je Displayzeile an. Die Werte qX und qY betreffen die Wiederholung der Ansichten in x- bzw. y-Richtung. So bedeuten beispielsweise ein qA = 1 und ein qB = 1 eine Addition einer Ansicht in je einer Spalte, während ein qX = 1 bzw. qY = 1 eine Wiederholungsrate von je einer Ansicht in x- bzw- y-Richtung bedeuten. Damit Datensätze mit diesem Parametersatz auf einer gegebenen Displayfläche zu einem entsprechenden Raumeindruck beim Betrachter führen, muss die Parallax-Barriere auf diese Darstellungen angepasst werden. In Hinblick auf die in den Figuren 5, 6 und 7 gezeigten Ausführungsformen bedeutet dies konkret, die Barrierelinien, die Barrierefläche und somit auch das gesamte virtuelle Netz aus den Verankerungs-Boxen mit den durch diesen definierten Strukturelementen geeignet zu skalieren und auf das Display anzupassen.

Natürlich sind eine Vielzahl von Parametersätzen möglich. In den nachfolgenden Tabellen sind für verschiedene Ansichtenzahlen $n_V$ eine Reihe beispielhafter Parameter qA, qB, qX und qY aufgeführt. In den nachfolgenden Tabellen 1 und 2 ist qY, die Wiederholungszahl in y-Richtung, variiert. Als Nebenbedingung gilt für größere als die hier aufgeführten Ansichtenzahlen $n_V$, dass die Ansichtenzahl in jedem Fall keine durch 3 teilbare Zahl sein darf:

Tabelle 1:

| $n_V$ | qA | qB | qX | qY |
|---|---|---|---|---|
| 2 | 1 | 1 | 1 | 1 |
| 4 | 1 | 1 | 1 | 1 |
| 5 | 1 | 1 | 1 | 1 |
| 7 | 1 | 1 | 1 | 1 |
| 10 | 1 | 1 | 1 | 1 |
| 11 | 1 | 1 | 1 | 1 |

Tabelle 2:

| $n_V$ | qA | qB | qX | qY |
|---|---|---|---|---|
| 2 | 1 | 1 | 1 | 3 |
| 4 | 1 | 1 | 1 | 3 |
| 5 | 1 | 1 | 1 | 3 |
| 7 | 1 | 1 | 1 | 3 |
| 10 | 1 | 1 | 1 | 3 |
| 11 | 1 | 1 | 1 | 3 |

Sofern andere Ansichtenzahlen gefordert werden, müssen die Parameter entsprechend anders gesetzt werden. Tabelle 3 zeigt ein diesbezügliches Beispiel für Ansichtenzahlen $n_V$, bei der durch 3 teilbare Zahlen erlaubt sind, während durch 9 teilbare Zahlen verboten sind:

Tabelle 3:

| $n_V$ | qA | qB | qX | qY |
|---|---|---|---|---|
| 6 | 3 | 1 | 1 | 1 |
| 12 | 3 | 1 | 1 | 1 |
| 15 | 3 | 1 | 1 | 1 |
| 21 | 3 | 1 | 1 | 1 |
| 30 | 3 | 1 | 1 | 1 |

(fortgesetzt)

| $n_V$ | qA | qB | qX | qY |
|---|---|---|---|---|
| 33 | 3 | 1 | 1 | 1 |

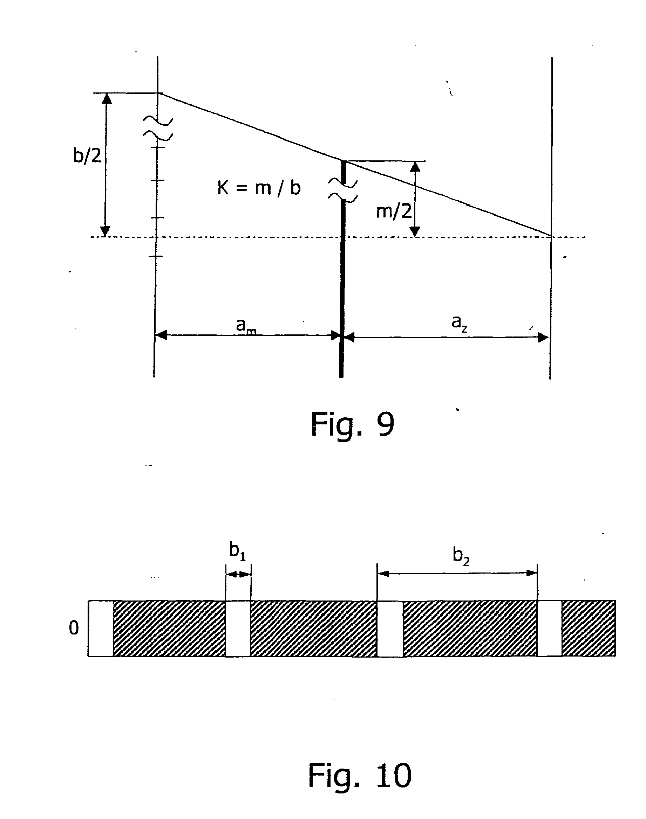

Fig. 9 zeigt eine Beispielskizze zur Ermittlung eines Korrekturfaktors für eine Barrierestruktur, der zur Skalierung der Verankerungs-Boxen und Strukturelemente verwendet wird. Bei der Skalierung wird vor allem eine Anpassung der Spaltbreite der transparenten Bereiche der Barrierefläche und der so genannten Spaltpitch ausgeführt.

Fig. 10 illustriert diese grundlegenden Barriereparameter. Die Spaltbreite $b_1$ bezeichnet die Breite des "Fensters", durch das ein Pixel bzw. ein Subpixel der Displayfläche durch die Barriere hindurch betrachtet werden kann, bzw. durch das das Pixel bzw. das Subpixel beleuchtet wird. Die Spaltpitch $b_2$ bezeichnet die "Gitterkonstante" der Barriere und steht in Beziehung zur Ansichtenzahl der Anzeigevorrichtung bzw. zu dem auf der Displayfläche angezeigten Datensatz, insbesondere zu den oben erwähnten Parametern qA, qB, qX und yY.

Der Korrekturfaktor K beschreibt im wesentlichen die zentrische Streckung der Pixelbreite bei der in der Fig. 9 gezeigten Abbildungsgeometrie. Unter diesen Bedingungen gilt für den Korrekturfaktor:

$$K = \frac{a_z}{a_z + a_M} \qquad (2)$$

Zusammen mit der oben genannten Gleichung (1) ergibt sich somit:

$$K = \frac{a_z}{a_z + \dfrac{b_0 a_z}{A}} = \frac{A}{A + b_0} \qquad (3)$$

Bei einem Wert von A = 65 mm und $b_0$ = 0,181 mm ergibt sich beispielsweise ein Wert von K = 0,997. Mit diesem Wert wird die erwähnte Spaltbreite bzw. die Spaltpitch skaliert.

Der skalierte Wert für die Spaltbreite $b_1$ ergibt sich unter Verwendung der Subpixelbreite $b_0$ und dem Korrekturfaktor K durch die Beziehung

$$b_1 = b_0 K , \qquad (4)$$

beziehungsweise

$$b_1 = \frac{A b_0}{A + b_0} . \qquad (4a)$$

Die Spaltpitch $b_2$ ergibt sich unter Verwendung der Ansichtenzahl $n_V$ und der so ermittelten Spaltbreite $b_1$ durch die Beziehungen

$$b_2 = b_1 n_v , \qquad (5)$$

beziehungsweise

$$b_2 = \frac{Ab_0}{A+b_0} n_v .\qquad\qquad (5a)$$

Zur Skalierung der vorhergehend beschriebenen Verankerungs-Boxen wird auf die Berechnung der Ansichtennummer an der Subpixelposition mit dem Indexpaar (i, j) zurückgegriffen. Diese Ansichtennummer wird als ein Wert V berechnet, wobei folgende Beziehung verwendet wird:

$$V = n_V\, FractPart\left[\frac{IntPart\left(\frac{i}{qX}\right)\cdot qA + IntPart\left(\frac{j}{qY}\right)\cdot qB}{n_V}\right]\qquad (6)$$

Dabei sind i und j die vorhergehend erwähnten Indizes der Subpixel auf dem Display und qA, qB, qX und qY die vorhergehend erläuterten Parameter zur Anordnung der Ansichten innerhalb des Datensatzes. Die Beziehung (6) beschreibt den Bildschirminhalt für eine autostereoskopische Anzeigevorrichtung, deren Bilddarstellung durch den Parametersatz i, j, qA, qB, qX und qY bestimmt wird, vollständig. Die Funktion FractPart bezeichnet dabei den gebrochenzahligen Anteil des in der Klammer stehenden Ausdrucks, die Funktion IntPart bezeichnet den ganzzahligen Anteil des Klammerausdrucks.

Zur exakten Berechnung der Position der Strukturelemente auf der Barrierenfläche wird auf die Gleichung (6) zurückgegriffen. Alle - in dem hier angenommenen Fall transparenten - Strukturelemente innerhalb der Verankerungs-Boxen auf der opaken Barrierenfläche werden mit ihren Schwerpunkten an den Positionen einer gleichen Ansichtennummer, beispielsweise an den Positionen der Ansicht 0, 1, 2 usw., platziert. Dabei kann die Höchstzahl der Indexelemente i und j von der Anzahl der Rasterelemente, d.h. der Subpixel, der Displayfläche abweichen.

Die absolute Position der Verankerungs-Box für jedes Strukturelement ergibt sich durch eine Multiplikation des jeweiligen Wertes für den Laufindex i mit der Breite $b_0$ des Rasterelementes in horizontaler Richtung und durch eine Multiplikation des jeweiligen Wertes für den Laufindex j mit der Pixelhöhe $p_y$ in vertikaler Richtung.

Die abschließende Anpassung der so erzeugten Struktur der Parallax-Barriere erfolgt durch die Skalierung der Verankerungs-Boxen und damit auch der Strukturelemente unter Verwendung des beschriebenen Korrekturfaktors K. Die Skalierung bewirkt im wesentlichen eine zentrische Streckung des virtuellen Rasters mindestens in Richtung der Horizontalen oder Vertikalen. Vorwiegend bleibt jedoch das Seitenverhältnis der horizontalen Richtung zur vertikalen Richtung bei dem virtuellen Raster erhalten.

Nachfolgend sollen Strukturelemente näher erläutert werden, die als Kombination aus einem holografischen Element, insbesondere einer Zonenplatte, und einer Barriere ausgebildet sind. Eine so ausgebildete Parallax-Barriere wird im Folgenden als Parallax-Zonenfeld bezeichnet.

Ein entscheidender Nachteil linsenloser Parallax-Barrieren ist die im Vergleich mit einer Linsenstruktur geringere Helligkeit, ein Vorteil ist jedoch die relativ einfache und preiswerte Möglichkeit der Herstellung. Im Folgenden soll ein Strukturelement beschrieben werden, welches eine deutlich höhere Transmission im Vergleich mit einer linsenlosen Parallax-Barriere aufweist, aber dennoch im Vergleich zu einer Linsenstruktur vergleichsweise einfach herstellbar ist. In Verbindung mit den Figuren 6, 7 und 8 sind verschiedenartige Strukturelemente beschrieben worden, die nach der Anordnungsvorschrift über die Barriere verteilt werden. Es wurden Zonenplatten im einzelnen und holografische Objekte im allgemeinen bereits genannt.

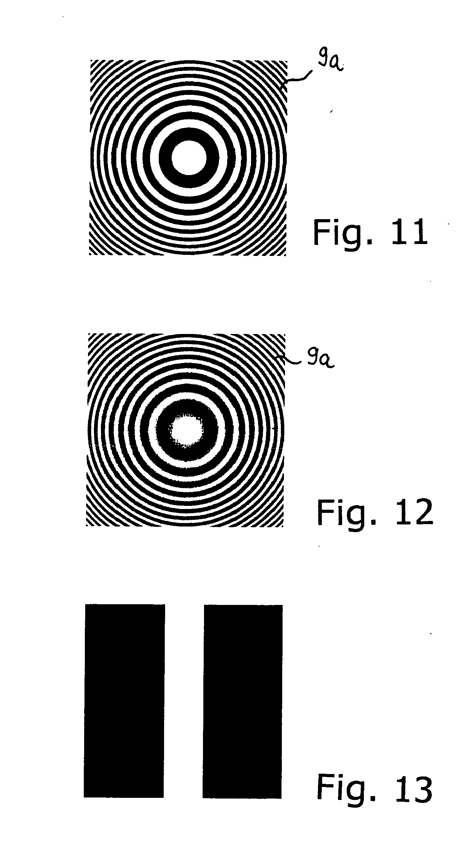

Eine beispielhaft in den Figuren 11 und 12 gezeigte Zonenplatte 9a stellt eine einfache Form eines Hologramms dar und kann als Amplitudenhologramm, Phasenhologramm oder als eine Kombination aus beidem ausgeführt sein. Es sind unterschiedliche Ausprägungen von Zonenplatten bekannt. Die hier dargestellte Ausführungsform besteht aus abwechselnd transparenten und opaken konzentrischen Ringen. Der Übergang zwischen den opaken und transparenten Ringen muss nicht, wie in Fig. 11 gezeigt, sprunghaft oder gar binär erfolgen, sondern er kann auch nach einer bestimmten Funktion, wie in Fig. 12 dargestellt, kontinuierlich verlaufen. Eine Zonenplatte nach der Ausführungsform in Fig. 11 wird häufig als "Fresnel-Zonenplatte", und eine Zonenplatte nach der Ausführungsform in Fig. 12 als "Gabor-Zonenplatte" bezeichnet. Die Zonenplatte bewirkt infolge von Beugung eine Fokussierung des Lichtes in einer für die Zonenplatte geltenden Brennweite. Zwischen den Radien r der Ringe n, der Wellenlänge λ des hindurch tretenden Lichtes und der Brennweite f der Zonenplatte besteht der Zusammenhang

$$r(n) = \sqrt{n \cdot \lambda \cdot f} \, . \qquad (7)$$

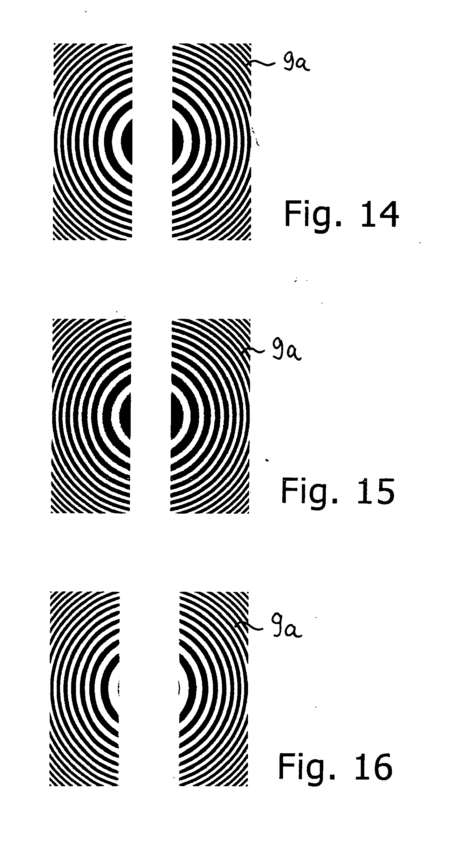

Die in den Figuren 11 und 12 gezeigten Zonenplatten zeigen eine hohe Transmission, die deutlich besser ist, als bei einem in Fig. 13 gezeigten klassischen Barrierespalt. Dies ist insbesondere bei hohen Ansichtenzahlen von Vorteill. Fügt man, wie in den Figuren 14 und 15 gezeigt, in die Zonenplatte zusätzlich den transparenten Bereich einer Barrierestruktur, d.h. einen Spalt, ein, kann die Transmission nochmals verbessert werden.

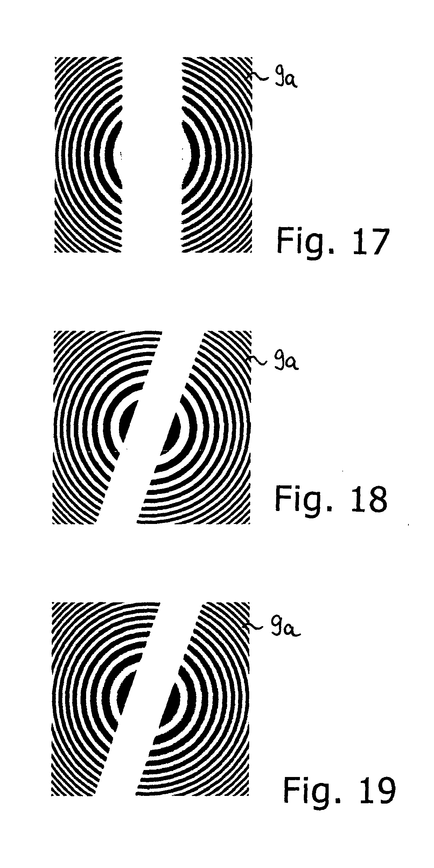

In Verbindung damit kann die Barrierestruktur, also der Spalt, zur Verringerung von Moiré-Effekten und/oder zur Steigerung der Helligkeit zusätzlich in einem Randbereich mit einem Verlauf versehen sein, wie in den Figuren 16 und 17 dargestellt.

Wie bereits beschrieben, ist eine schräge Anordnung des Barrierespalts zur Verringerung von Moiré-Effekten vorteilhaft. Eine solche Ausführungsform ist in den Figuren 18 und 19 gezeigt. Der schräge Barrierespalt kann zusätzlich mit einem quer zur Längsrichtung des Spaltes orientierten Verlauf kombiniert sein. Beispiele hierfür sind in den Figuren 20 und 21 gezeigt.

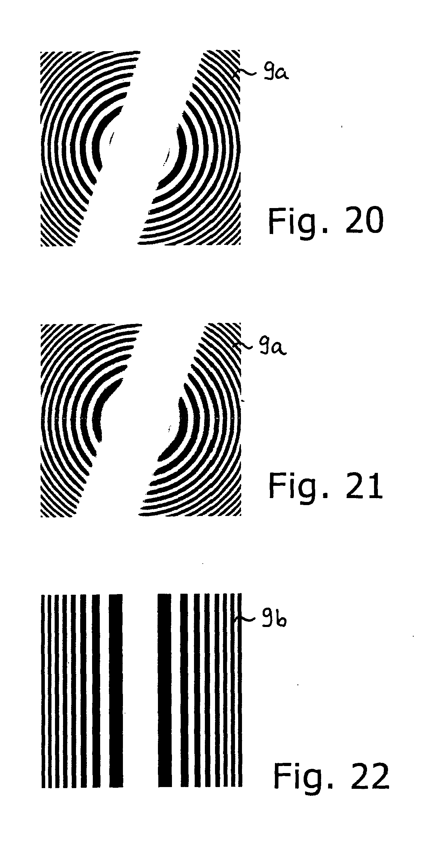

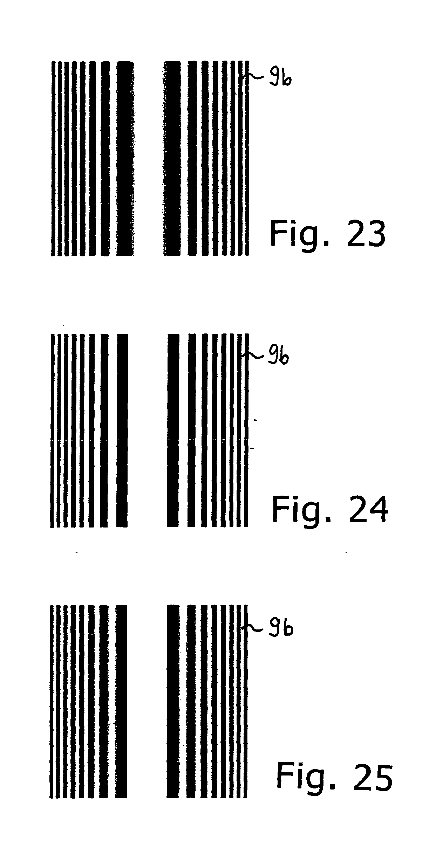

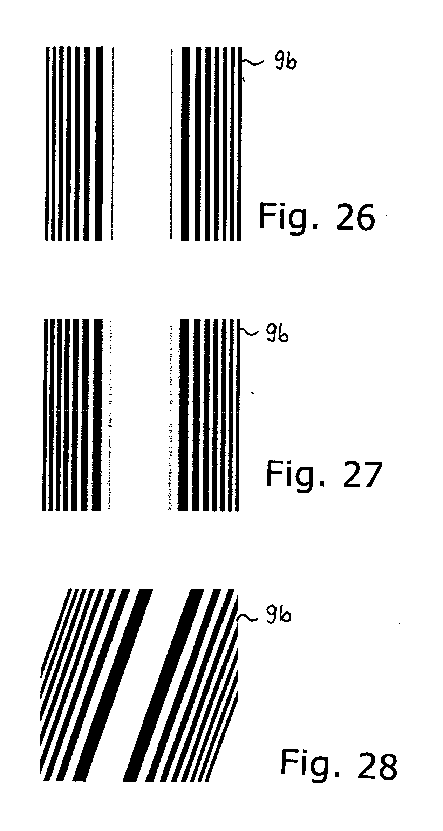

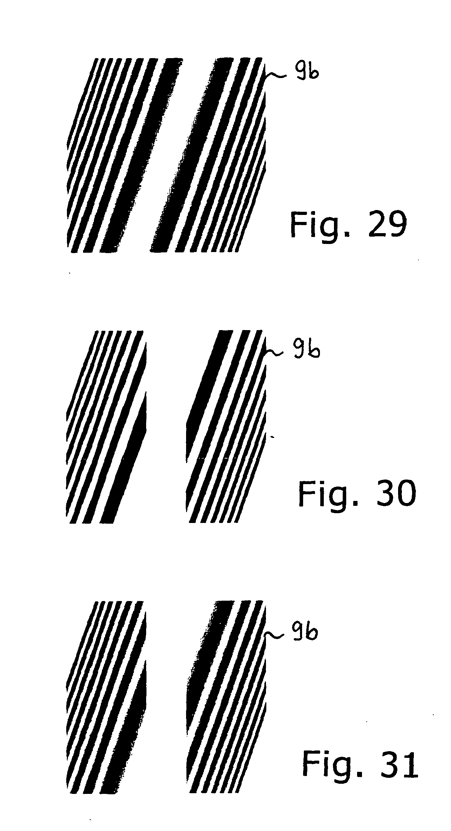

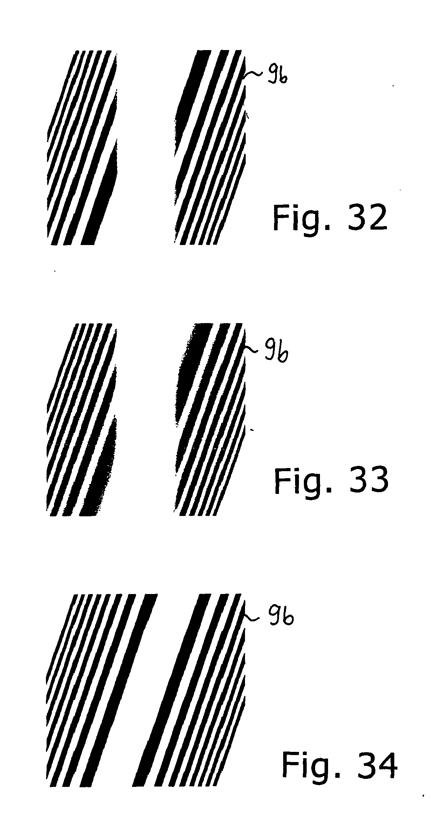

Wird auf eine Parallaxe in vertikaler Richtung verzichtet, so kann die vorhergehend dargestellte kreisförmige Zonenplatte zu einer linearen Zonenplatte 9b vereinfacht werden. Beispiele hierfür sind in den Figuren 22 und 23 gezeigt. Wie in den Figuren 24 bis 27 dargestellt, kann auch die lineare Zonenplatte auch mit einem Barrierespalt kombiniert werden. Auch in diesem Fall können die Barrierespalte und die lineare Zonenplatte gemäß der Figuren 28 und 29 schräg orientiert sein. Schließlich können Kombinationen aus schräger linearer Zonenplatte und geradem Barrierespalt wie in den Figuren 30 und 31 vorgenommen werden.

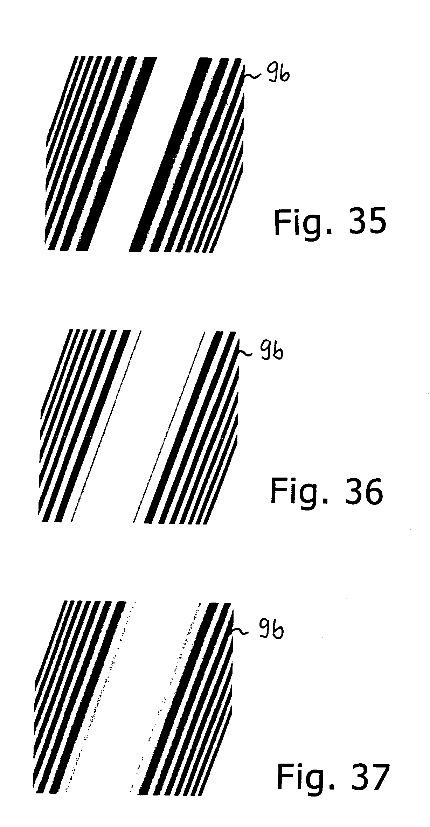

Wie aus den Figuren 32 und 33 entnommen werden kann, ist auch ein zusätzlicher Verlauf der Opazität über dem Barrierespalt und/oder der Zonenplatte möglich. Weitere Verbesserungen ergeben sich durch unterschiedliche Kombinationen aus schräg gestelltem Barrierespalt mit oder ohne Verlauf bzw. schräger Zonenplatte in einer binären Fresnel- oder einer Gabor-Variante, wie in den Figuren 34, 35, 36 und 37 gezeigt.

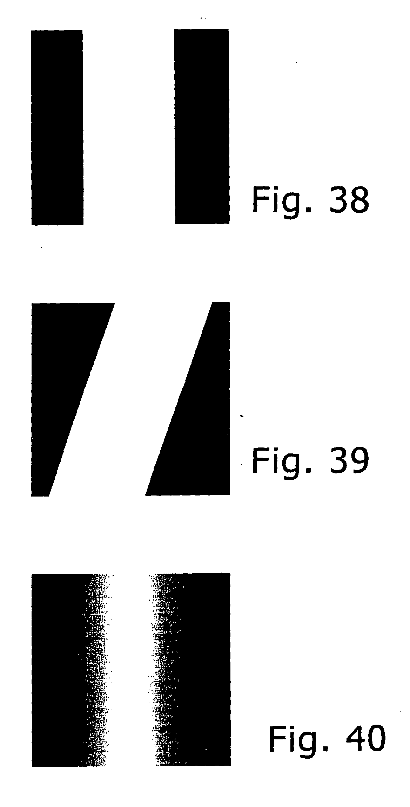

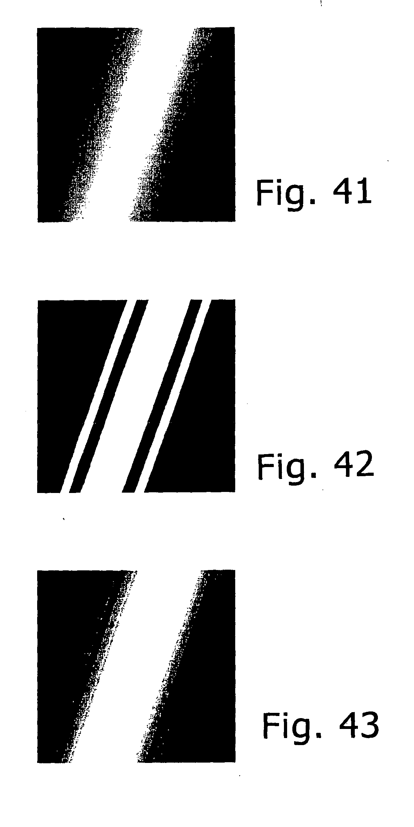

Wie der Vergleich der Figuren 38 und 39 mit den Figuren 40 und 41 zeigt, können zu den bereits erwähnten Kombinationen und Formen aus Zonenplatte und Barrierespalt Verläufe zwischen dem transparenten Spaltbereich und der opaken Umgebung hinzugefügt werden.

Fig. 42 zeigt eine beispielhafte Kombination aus schräger linearer 1-Bit Zonenplatte mit sprunghaftem Zonenwechsel und schräger Barrierestruktur für 5 Ansichten sowie einer schrägen 1 Bit Vignettierung.

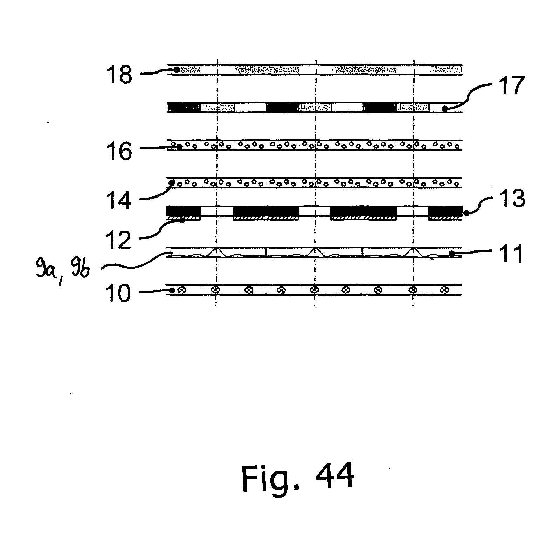

Eine vorteilhafte Ausgestaltung dieser Ausführungsform ist in Fig. 43 dargestellt: Bei der hier gezeigten Ausführungsform handelt es sich um eine Kombination aus eine schrägen linearen 8-Bit Zonenplatte mit kontinuierlichem Zonenwechsel und schräger Barrierestruktur, die für eine Ansichtzahl von 5 optimiert ist. Es liegt ein Verlauf sowohl über den Barrierespalt selbst, als auch ein schräger 8 Bit Dichteverlauf im Bereich der linearen Zonenplatte vor. Diese Struktur zeigt eine 47%ige Transmission im Vergleich zu einer nur 20%igen Transmission bei einer Barriere gemäß der Ausführungsform nach Figur 13. Mit dieser oder einer vergleichbaren Anordnung können so auch bei hohen bzw. extrem hohen Ansichtenzahlen, insbesondere in einer Supermultiview-Konfiguration, gute Transmissionen erzielt werden. Selbstverständlich sind auch andere Kombinationen möglich.

Die vorhergehend genannten Gleichungen (2) bis (5a), die zur Berechnung von Spaltbreite $b_1$ und Spaltpitch $b_2$ herangezogen werden, betreffen im Wesentlichen Projektionen der Pixel- und Subpixelbreite auf die Barrierenfläche. Bei einer Veränderung der Betrachterposition und der damit verbundenen Abweichung vom idealen Betrachtungsabstand $a_z$ können Überlagerungs- bzw. Moiré-Effekte wahrgenommen werden, die manche - insbesondere ungeübte - Betrachter als störend empfinden. Dabei verhalten sich Moiré-Effekte und 3D-Bildqualität, in diesem Fall vor allem die Kanaltrennung zwischen den Perspektivansichten, zueinander proportional. Eine Verringerung der Moire- und Überlagerungserscheinungen führt zu einer Verminderung der 3D-Bildqualität, eine Verbesserung der Kanaltrennung (und damit der Bildqualität) führt dagegen auch zu einer deutlicheren Wahrnehmbarkeit der Moiré-Effekte.

Bei einigen Anwendungen ist die Verringerung der Moiré-Effekte und die damit einhergehende verbesserte Wahrnehmung des 3D-Bildes aus unterschiedlichen, vom idealen Betrachtungspunkt abweichenden, Positionen notwendig. Derartigen Situationen können z.B. Präsentationen vor breitem Publikum auf Messen, Ausstellungen oder in Verkaufsräumen sein, aber auch Anwendungen, bei denen mehrere Personen gleichzeitig und/oder gleichwertig das 3D-Bild sehen müssen, aber auch Installationen, bei denen sich die Positionierung der Anzeigevorrichtung oder die Standpunkte der Betrachter auf die jeweilige ideale Betrachtungsposition nicht gewährleisten lässt. Für derartige oder ähnliche Anwendungen ist es zweckmäßig, die reale Spaltbreite $b_{R_1}$ von der errechneten Spaltbreite $b_1$ abweichend zu

gestalten. Dabei führt insbesondere bereits eine geringfügige Vergrößerung der Spaltbreite zu einer deutlichen Verringerung der Moiré-Effekte, bei nur geringer Verminderung der 3D-Bildqualität. Die Verminderung der Bildqualität ist dabei umso geringer, je höher die Ansichtenzahl $n_V$ ist. Eine Verbreiterung der Spaltbreite führt dabei zusätzlich zu einer häufig wünschenswerten Erhöhung der Transmission in der Barrierefläche.

Vor allem bei kritischen Entscheidungsprozessen, medizinischen Anwendungen, Prozess- oder Sicherheits-Überwachungen und dergleichen Einsatzgebieten, ist eine verbesserte Kanaltrennung der Einzelansichten wichtiger, als eine Verringerung der Moiré-Effekte. Auch für derartige oder ähnliche Anwendungen kann die Abweichung der realen Spaltbreite $b_{R1}$ von der errechneten Spaltbreite $b_1$ vorteilhaft genutzt werden. Allerdings muss hier die Spaltbreite verringert werden. Eine Verringerung der Spaltbreite führt durch die bessere Kanaltrennung zu einer besseren 3D-Bildqualität, allerdings auch zu einer deutlicheren Wahrnehmung der Moiré-Effekte. Eine Verringerung der Spaltbreite führt zusätzlich zu einer Verringerung der Transmission.

Weitere Maßnahmen zur Verbesserung der Abbildungsqualität können durch zweckmäßige Veränderungen an der Extinktion bzw. der optischen Dichte der Barrierestruktur vorgenommen werden. Eine zweckmäßige Veränderung der optischen Dichte kann zur weiteren Verringerung der Moiré-Effekte genutzt werden. Die optische Dichte D eines Mediums wird häufig als natürlicher Logarithmus der Opazität O angegeben. Die Opazität O ist als Kehrwert der Transmission eines Materials definiert, die optische Dichte D ist definiert als

$$D = - \lg(O).$$

Beträgt die Opazität der opaken Anteile der Barrierestruktur z.B. 0, 001% bzw 1/100.000, ergibt sich eine optische Dichte von 5. Eine Verringerung der Dichte auf 3 bringt keine visuell wahrnehmbare Verringerung der Kanaltrennung, jedoch bereits eine wahrnehmbare Verringerung der Moiré-Effekte. In Abhängigkeit von der Gestaltung der Barrierestruktur, der Strukturelemente sowie der Ansichtenzahl kann ein deutlich wahrnehmbares 3D-Bild auch noch mit einer Extinktion <1 erreicht werden. Die Verringerung der optischen Dichte führt zu einer weiteren Erhöhung der Transmission. Ebenso können die transparenten Barriereabschnitte zur weiteren Verringerung der Moiré-Effekte mit einer optischen Dichte >0 versehen sein. Eine weitere Ausführungsform ist ein stetiger Verlauf der optischen Dichte über das jeweilige Strukturelement.

Um Moiréerscheinungen bereits in der Ausgabedatei als Vorstufe für den Ausgabeprozess auf ein Ausgabemedium zu vermeiden, muss die Abmessung und/oder Pixelzahl jeder inhärenten Struktur iS des einzelnen Strukturelementes jeweils ein ganzzahliger Teil des sich wiederholenden Spaltpitches $b_2$ sein. Bei unterschiedlichen Strukturelementen gilt dies für alle inhärenten Strukturen aller Strukturelemente. Der Quotient aus Abmessung oder Pixelzahl der inhärenten Struktur iS und des Spaltpitches $b_2$ mit der gleichen Masseinheit ist in diesem Fall eine Zahl aus der Menge Z der ganzen Zahlen:

$$iS / b_2 \in Z.$$

Um ausgehend von der hinsichtlich der Moiréfreiheit optimierten Ausgabedatei die genauen Abmessungen der Barriereelemente und des Barrierefeldes zu ermitteln, muss neben der korrekten Pixelzahl auch die zugehörige Ausgabeauflösung eingestellt werden. Diese muss nicht notwendig eine ganze Zahl sein. Die Ausgabeauflösung ersetzt hier de Facto den Abbildungsmaßstab.

Nachfolgend wird eine beispielhafte Anordnung zur 3D-Darstellung mit Parallax-Zonenfläche als Bestandteil der Barriere mit Möglichkeit zur 2D-Umschaltung beschrieben.

Die Anordnung einer Parallax-Zonenfläche vor und/oder hinter einem Displayarray ist bereits in Verbindung mit Fig. 8 und Fig. 9 beschrieben worden. Wegen der Verringerung der Auflösung, wie sie üblicherweise an einem einfachen autostereoskopischen Anzeigesystem auftritt, kann eine Umschaltung zwischen einem 2D und 3D-Modus des Displays wünschenswert sein. Damit ist das autostereoskopische Anzeigesystem in voller Auflösung auch als normaler Bildschirm verwendbar.

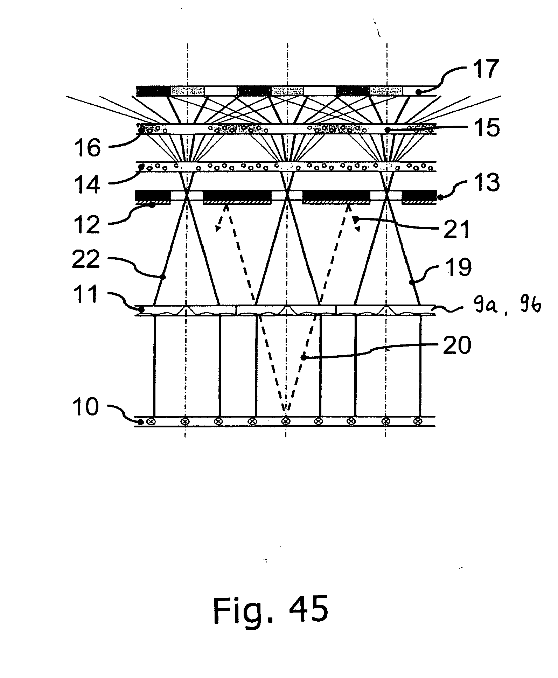

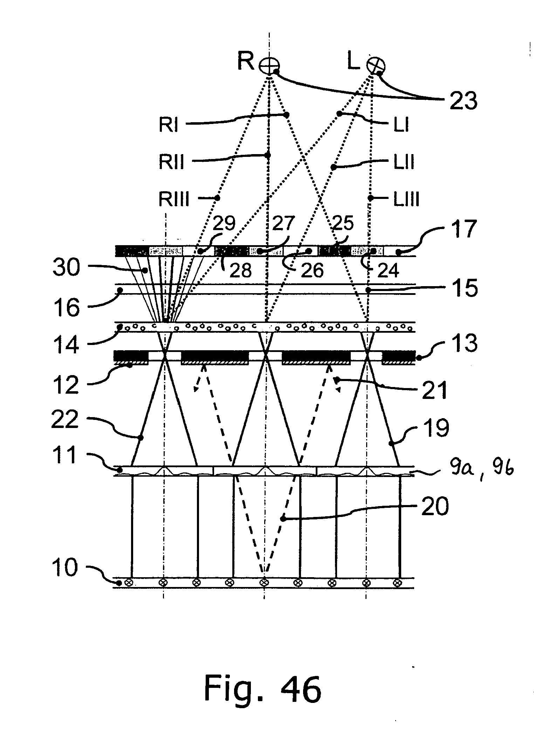

In Fig. 44 ist ein solcher Aufbau schematisch beschrieben, die Beschreibung erfolgt beginnend von der Rückseite der Anzeigevorrichtung. Die Abstände zwischen den einzelnen Elementen werden in den Beschreibungen zu Fig. 45 und Fig. 46 beschrieben. Grundsätzlich können die Abstände eines oder auch mehrerer Elementes zueinander mittels einer Einstellvorrichtung verändert werden. Dabei muss die parallele Zuordnung zwischen den Ebenen erhalten bleiben. In den Ausführungsbeispielen wurde jedoch der Übersichtlichkeit halber auf die Darstellung dieser Verstellmöglichkeit verzichtet.

Eine vorzugsweise als ebener Flächenstrahler ausgebildete Lichtquelle 10 dient der rückwärtigen Beleuchtung. Eine besondere Ausführungsform besteht in der Anwendung einer kohärenten Beleuchtung (z.B. eines Lasers). Damit kann eine deutliche Verbesserung des Wirkungsgrades sowie der Abbildungsqualität der Zonenplatten erreicht werden. Bei dieser speziellen Ausführungsform können einzelne Wellenlängen bestimmten für diese Wellenlängen optimierten Zonenplatten geometrisch zugeordnet werden.

Über der Lichtquelle 10 befindet sich eine Gesamtheit von Zonenplatten 9a oder 9b in einer kreisförmigen oder linearen Ausführung. Diese bilden eine Parallax-Zonenfläche 11 gemäß der vorhergehend beschriebenen Anordnungsvorschrift und Gestaltung.

Ein darüber angeordneter Licht-Recycling-Spiegel 12 auf der Unterseite einer Feld-Barriere 13 sendet das von der Feld-Barriere blockierte Licht zurück, wo es letztlich von den Reflektoren der Lichtquelle erneut in Richtung der Betrachterseite ausgesandt wird. Dieser Spiegel kann schaltbar gestaltet sein, insbesondere dann, wenn die Feld-Barriere schaltbar ist. Wenn die Helligkeit der Anordnung nicht von großer Wichtigkeit ist, kann auf den Licht-Recycling-Spiegel verzichtet werden.

Die Feld-Barriere 13 erfüllt noch eine weitere Funktion. Eine Zonenplatte verhält sich gleichzeitig wie eine Sammel- und Zertreuungslinse. Im 3D-Modus wird jedoch vorzugsweise die fokussierende Wirkung der Zonenplatten auf der Parallax-Zonenfläche benötigt. Die Feld-Barriere blockiert den divergenten Anteil des von den Zonenflächen gebeugten Lichtes. Die Feld-Barriere kann schaltbar, z.B. elektrochrom, ausgeführt sein. In einem ersten Schaltzustand bildet die Feld-Barriere die notwendigen transparenten und opaken Barrierestrukturen aus. In einem zweiten Schaltzustand ist die Feld-Barriere durchgängig transparent und die Anzeigevorrichtung erlaubt nur eine zweidimensionale Bildwiedergabe.

Eine darüber befindliche Projektions-Streuplatte 14 kann zuschaltbar mit den Schaltzuständen transparent/streuend oder auch als passives Element als nicht-schaltbare Streuplatte ausgeführt sein.

Zur Erhöhung der Gleichförmigkeit des Beleuchtungslichtes im 2D-Modus durch Streuung ist ein Streulicht-Integrator 16 vorgesehen. Der Streulicht-Integrator kann durch eine zuschaltbare Streuplatte realisiert werden. Dabei kann die Streuplatte durch Anlegen von Spannung von streuend auf transparent und umgekehrt geschaltet werden. Solche schaltbaren Gläser sind kommerziell verfügbar. Im 2D-Modus ist der Schaltzustand auf streuend, im 3D-Modus dagegen auf transparent geschaltet. Wenn eine Verbesserung der Gleichförmigkeit der Beleuchtung im 2D-Modus nicht erforderlich ist, kann auf den Einsatz des Streulicht-Integrators verzichtet werden.

Darüber schließt sich ein LCD-Array 17 an. Auf diesem Element werden die Einzelansichten gemäß Anordungsvorschrift dargestellt. Das Array ist ganz oder teilweise transparent bzw. transluzent. Schließlich enthält der in Fig. 44 dargestellte Aufbau eine Verstärkungsplatte 18 als ein optisches Element zur Verbesserung der Kanaltrennung. Dieses optische Element kann ein Linsenarray, eine Parallax-Barriere, eine Parallax-Zonenfläche oder ein ähnliches Element sein. Da bereits der darunter befindliche Aufbau die autostereoskopische Wirkung gewährleistet, dient die Verstärkungsplatte 18 lediglich zur Verstärkung des räumlichen Bildeindrucks. Der Wirkungsgrad ist daher vorzugsweise so gering, dass die Verstärkungsplatte im 2D-Modus nicht oder kaum wahrgenommen werden kann. Dies kann bei Linsenarrays z.B. durch Wahl eines grossen Linsenradius, bei Parallax-Barrieren oder Parallax-Zonenflächen durch Verringerung der optischen Dichte und/oder durch Vergrösserung der transparenten Bereiche (Zonen) erreicht werden. Wenn eine zusätzliche Verstärkung nicht erforderlich ist, kann auf den Einsatz der Verstärkungsplatte verzichtet werden. Die Verstärkungsplatte kann auch als (strukturiertes) zuschaltbares Element ausgeführt werden, z.B. als schaltbare Linsen, elektrochrome Schichten oder LC-Barriere. Lösungen für schaltbare Linsen sind bekannt.

In Fig. 45 und Fig. 46 ist ein bevorzugter Aufbau beschrieben, der in Fig. 45 im 2D-Modus, sowie in Fig. 46 im 3D-Modus dargestellt ist. Über einer ebenen Lichtquelle 10, die mit einem Lichtreflektor (der Lichtaustrittsfläche gegenüberliegend) ausgestattet ist, befindet sich eine die Zonenplatte 9a bzw. 9b enthaltene Parallax-Zonenfläche 11 gemäß Anordnungsvorschrift. Die Lichtquelle befindet sich vorzugsweise in der Ebene der (virtuellen) Brennpunkte der Parallax-Zonenfläche. Der Parallax-Zonenfläche nachgeordnet ist eine Kombination aus Feld-Barriere 13 und Licht-Recycling-Spiegel 12. Diese Kombination befindet sich vorzugsweise in der Ebene der (reellen) Brennweiten der Parallax-Zonenfläche. Die divergenten Anteile 20 des Strahlenbündels werden dabei weitgehend vom Licht-Recycling-Spiegel reflektiert, wie Bezugzeichen 21 zeigt. Das fokussierte Lichtbündel 19 trifft auf die Projektions-Streuplatte 14. Der Abstand zwischen Projektions-Streuplatte und Feld-Barriere ist so gewählt, das das resultierende Streufeld auf der Projektions-Streuplatte eine bestimmte Ausdehnung hat, die vorzugsweise der Spaltbreite $b_1$ annähernd entspricht. Diese Entfernung lässt sich sehr einfach nach den Regeln der geometrischen Optik bestimmen. Im Ausführungsbeispiel ist die Projektions-Streuplatte nicht schaltbar, sondern passiv ausgeführt.

Das gestreute Licht der Projektions-Streuplatte fällt nun auf den Streulicht-Integrator 16, wobei sich an der Durchtrittsstelle 15 ein bestimmter Helligkeitsverlauf über jedem Streufeld einstellt. Die Abstände zwischen Projektions-Streuplatte 14, Streulicht-Integrator 16 und Displayarray 17 sind so gewählt, dass eine homogene Ausleuchtung des Displayarrays erreicht werden kann, sodass dessen möglicherweise vorhandene Inhomogenitäten vom Betrachter nicht als störend wahrgenommen werden können.

In Fig. 46 ist der gleiche Aufbau im 3D-Modus dargestellt. Zur Erläuterung ist hier zusätzlich das Augenpaar eines Beobachters 23 mit den vom linken Auge L ausgehenden Sehstrahlen LI, LII, LIII, sowie den vom rechten Auge R ausgehenden Sehstrahlen RI, RII, RIII dargestellt. Ein von der Projektions-Streuplatte 14 ausgehendes divergentes Strahlenbündel 30 verdeutlicht schematisch eine beispielhafte inhomogene Abstrahlcharakteristik des projizierten Streufeldes. Diese inhomogene Abstrahlcharakteristik dient im Ausführungsbeispiel der Einschränkung der Schrägsicht zur Vermeidung von Moire- und Überlagerungserscheinungen bei lateraler Abweichung von der idealen Betrachtungsposition im 3D-Modus.

Der funktionsbestimmende Unterschied zum 2D Modus besteht in der Schaltung des Streulicht-Integrators 16 auf einen transparenten Zustand. Dadurch entsteht an der Durchtrittstelle 15 kein weiteres Streufeld. Dem Betrachter wird dadurch die Direktsicht auf die Streufelder der Projektions-Streuplatte freigegeben. Dabei sieht der Betrachter mit dem linken Auge L durch das Schaltelement 24 (Sehstrahl LIII) dasselbe Streufeld wie mit dem rechten Auge R durch das Schaltelement 25 (Sehstrahl RI). Zwei weitere Kombinationen sind mit 26 (LII) und 27 (RII) sowie 28 (LI) und 29 (RIII) dargestellt. Im Resultat sieht also der Betrachter die Schaltelemente 24, 26, 28 nur mit dem linken Auge, während die Schaltelemente 25, 27, 29 nur mit dem rechten Auge wahrnehmbar sind. Legt man nun in die Schaltelemente 24, 26, 28 die dem linken Auge zugehörige Perspektivansicht sowie in die Schaltelemente 25, 27, 29 die dem rechten Auge zugehörige Perspektivansicht, erhält man im Ergebnis einen autostereoskopischen Bildeindruck.

Die erfindungsgemäße Vorrichtung wurde anhand von beispielhaften Ausführungsformen erläutert. Es ist einsichtig, dass im Rahmen fachmännischen Handelns und unter Bezugnahme der Unteransprüche weitere Ausführungsformen gestaltet werden können, die nicht aus dem Bereich des erfindungsgemäßen Grundgedankens hinausführen.

Bezugszeichenliste

| | |
|---|---|
| 1 | Pixel |
| 2 | Subpixel |
| 3 | Displayarray |
| 4 | Parallax-Barriere |
| 5 | Barrierenfläche |
| 6 | Strukturelement |
| 7 | Barrierelinie |
| 8 | Verankerungs-Box |
| 9 | Schwerpunkt |
| 9a | Zonenplatte |
| 9b | Zonenplatte. linear |
| 10 | Lichtquelle |
| 11 | Parallax-Zonenfläche |
| 12 | Licht-Recycling-Spiegel |
| 13 | Feld-Barriere |
| 14 | Projektions-Streuplatte |
| 15 | Lichtdurchtrittsstellen |
| 16 | Streulicht-Integrator, schaltbar |
| 17 | LCD-Array |
| 18 | Verstärkungsplatte |
| 19 | fokussiertes Lichtbündel |
| 20 | divergente Strahlanteile |
| 21 | reflektierte divergente Strahlanteile |
| 23 | Beobachter, linkes und rechtes Auge |
| 24 | Schaltelement für linkes Auge |
| 25 | Schaltelement für rechtes Auge |
| 26 | Schaltelement für linkes Auge |
| 27 | Schaltelement für rechtes Auge |
| 28 | Schaltelement für linkes Auge |
| 29 | Schaltelement für rechtes Auge |
| 30 | divergentes Strahlenbündel, erzeugt von Streuplatte |

| | |
|---|---|
| A | Projektionsbreite |
| $a_m$ | Maskenweite |
| $a_z$ | Betrachtungsabstand |

| | |
|---|---|
| $b_0$ | Subpixelbreite |
| $b_1$ | Spaltbreite |
| $b_{R1}$ | reale Spaltbreite |
| $b_2$ | Spaltpitch |
| i | horizontaler Laufindex |
| j | vertikaler Laufindex |
| K | Korrekturfaktor |
| L | linkes Auge |
| R | rechtes Auge |
| $n_V$ | Ansichtenzahl |
| $p_v$ | Pixelhöhe |
| qA | Additionszahl je Spalte |
| qB | Additionszahl je Zeile |
| qX | Wiederholungszahl in x-Richtung |
| qY | Wiederholungszahl in y-Richtung |
| V | Ansichtennummer |

| | |
|---|---|
| B | Displayfläche |
| M | Parallax-Barriere |
| S | Spalt |
| Z | Betrachtungsebene |

**Patentansprüche**

**1.** Autostereoskopische Anzeigevorrichtung aus einem Displayarray (3) mit einer definierten Pixelanodnung und einer vor und/oder hinter dem Displayarray angeordneten Parallax-Barriere mit Barrierespalten,
**dadurch gekennzeichnet, dass**
der jeweilige Barrierespalt aus einer Reihe von Barriereelementen zusammengesetzt ist, wobei das einzelne Barriereelement ein transparentes oder opakes Strukturelement (6) und/oder eine holografische Struktur, insbesondere eine Zonenplatte, aufweist.

**2.** Autostereoskopische Anzeigevorrichtung nach Anspruch 1,
**dadurch gekennzeichnet, dass**
durch die Strukturelemente (6) eine Barrieretextur aus einer Reihe von schräg über die Barrierefläche verlaufenden und glatten Barrierelinien (7) ausgebildet ist.

**3.** Anzeigevorrichtung nach einem der Ansprüche 1 oder 2,
**dadurch gekennzeichnet, dass**
die Lage jedes einzelnen Strukturelementes (6) durch ein über die Barrierefläche (5) verteiltes virtuelles Raster aus einzelnen Verankerungs-Boxen (8) bestimmt ist, wobei ein Schwerpunkt (9) jeweils einer Verankerungs-Box den Ort des Strukturelementes auf der Barrierefläche beschreibt.

**4.** Anzeigevorrichtung nach einem der Ansprüche 1 bis 3,
**dadurch gekennzeichnet, dass**
die Verankerungs-Boxen nach einer für eine Bildzuordnungsvorschrift der Pixelanordnung des Displayarrays geeigneten Zuordnungsvorschrift auf der Barrierenfläche angeordnet und mittels eines geometrische Anzeige- und Betrachtungsparameter beschreibenden Korrekturfaktors skaliert sind.

**5.** Anzeigevorrichtung nach einem der Ansprüche 1 bis 4,
**dadurch gekennzeichnet, dass**
bei der Verteilung der Strukturelemente in Abhängigkeit von einer Ansichtenzahl ($n_V$) folgende Anordnungs-Parameter für eine Anordnung von Ansichten im stereoskopischen Bilddatensatz angepasst sind: eine Additionszahl pro Spalte (qA), eine Additionszahl pro Zeile (qB), eine Wiederholungszahl in x-Richtung (qX), eine Wiederholungszahl in y-Richtung.

**6.** Anzeigevorrichtung nach einem der vorhergehenden Ansprüche,
**dadurch gekennzeichnet, dass**

die Barrierefläche als ein transparentes Trägersubstrat mit einer auflaminierten Barrierefolie ausgebildet ist.

7. Anzeigevorrichtung nach einem der vorhergehenden Ansprüche,
   **dadurch gekennzeichnet, dass**
   die Barrierefolie als ein belichtetes Filmmaterial ausgebildet ist, wobei die Barrieretextur in Form belichteter dunkler opaker / hell transparenter Strukturen ausgebildet ist.

8. Anzeigevorrichtung nach einem der vorhergehenden Ansprüche,
   **dadurch gekennzeichnet, dass**
   die Zonenplatte als ein Amplitudenhologramm, ein Phasenhologramm oder als eine Kombination aus einem Amplitudenhologramm und einem Phasenhologramm ausgebildet ist.

9. Anzeigevorrichtung nach Anspruch 8,
   **dadurch gekennzeichnet, dass**
   die Zonenplatte (9a) als eine Fresnel-Zonenplatte mit transparenten und opaken Bereichen in einem binären Muster ausgebildet ist.

10. Anzeigevorrichtung nach Anspruch 8,
    **dadurch gekennzeichnet, dass**
    die Zonenplatte (9a) als eine Gabor-Zonenplatte mit transparenten und opaken Bereichen in einem kontinuierlich verlaufenden Muster ausgebildet ist.

11. Anzeigevorrichtung nach einem der vorhergehenden Ansprüche,
    **dadurch gekennzeichnet, dass**
    die Barrierelinien, insbesondere die Strukturelemente (6), an deren Randbereichen einen kontinuierlichen Übergang zwischen einem opaken und einem transparenten Bereich aufweisen.

12. Anzeigevorrichtung nach einem der vorhergehenden Ansprüche,
    **dadurch gekennzeichnet, dass**
    die Zonenplatte als eine kreisförmige Zonenplatte (9a) oder eine lineare Zonenplatte (9b) ausgebildet ist.

13. Anzeigevorrichtung nach einem der vorhergehenden Ansprüche,
    **dadurch gekennzeichnet, dass**
    die Barriereelemente, insbesondere die Strukturelemente (6) und/oder die jeweilige Zonenplatte, zusätzliche Randabschattungen, Vignettierungen und/oder optische Dichteverläufe aufweisen.

14. Anzeigevorrichtung nach einem der vorhergehenden Ansprüche,
    **dadurch gekennzeichnet, dass**
    die reale Spaltbreite ($b_{R1}$) der Barrierelinien zur Reduzierung von Moire-Effekten im Vergleich zu einem theoretischen Wert ($b_1$) vergrößert ist.

15. Anzeigevorrichtung nach einem der Ansprüche 1 bis 13,
    **dadurch gekennzeichnet, dass**
    die reale Spaltbreite ($b_{R1}$) der Barrierelinien zur Verbesserung der Kanaltrennung zwischen den Ansichten im Vergleich zu einem theoretischen Wert ($b_1$) verringert ist.

16. Anzeigevorrichtung nach einem der vorhergehenden Ansprüche,
    **dadurch gekennzeichnet, dass**
    die optische Dichte der opaken Abschnitte der Parallax-Barriere zur Verringerung von Moiré-Effekten gegenüber einem theoretischen Wert reduziert ist.

17. Anzeigevorrichtung nach einem der vorhergehenden Ansprüche,
    **dadurch gekennzeichnet, dass**
    die Anzeigevorrichtung zwischen einer zweidimensionalen und einer dreidimensionalen Bildanzeige umschaltbar ist, wobei die Parallax-Barriere aus einer zwischen einer rückwärtigen Lichtquelle (10) und einer mindestens teilweise transparenten oder transluzenten Displayfläche (17) angeordneten Anordnung aus einer Parallax-Zonenfläche (11) mit einer Gesamtheit von über die Zonenfläche gemäß einer Anordnungsvorschrift verteilten Zonenplatten und einer in Richtung der Displayfläche gelegenen Feld-Barriere (13) besteht.

**18.** Anzeigevorrichtung nach Anspruch 17,
**dadurch gekennzeichnet, dass**
die Feld-Barriere (13) als ein schaltbares, insbesondere ein elektrochromes, Element ausgebildet ist, wobei die Feld-Barriere bei einem ersten Schaltzustand eine Barrierenstruktur aus transparenten und opaken Bereichen zeigt und bei einem zweiten Schaltzustand durchgängig transparent ist.

**19.** Anzeigevorrichtung nach einem der Ansprüche 17 oder 18,
**dadurch gekennzeichnet, dass**
zwischen der Feld-Barriere (13) und der Displayfläche eine lichtstreuende Projektions-Streuplatte (14) angeordnet ist.

**20.** Anzeigevorrichtung nach Anspruch 19,
**dadurch gekennzeichnet, dass**
die Projektions-Streuplatte (14) zwischen einem streuenden und einen transparenten Zustand schaltbar ist.

**21.** Anzeigevorrichtung nach einem der Ansprüche 17 bis 20,
**dadurch gekennzeichnet, dass**
zwischen der Feld-Barriere (13) und der Displayfläche ein zwischen einem transparenten und einem streuenden Zustand schaltbarer Streulicht-Integrator (16) angeordnet ist.

**22.** Anzeigevorrichtung nach einem der Ansprüche 17 bis 21,
**dadurch gekennzeichnet, dass**
vor der Displayfläche (17) auf der Betrachterseite eine zur Verbesserung einer Kanaltrennung dienende mit Parallax-Barrierestrukturen versehene Verstärkungsplatte (18) zur Verstärkung der räumlichen Bildwiedergabe angeordnet ist.

**23.** Anzeigevorrichtung nach Anspruch 22,
**dadurch gekennzeichnet, dass**
die Barrierestrukturen der Verstärkungsplatte (18) zuschaltbare Elemente, insbesondere schaltbare Linsen, elektrochrome Schichten und/oder flüssigkristalline Barrieren sind.

Fig. 1

Fig. 2

EP 1 895 782 A2

Fig. 3

Fig. 4

Fig. 5

Fig. 6

Fig. 7

Fig. 8

Fig. 9

Fig. 10

Fig. 11

Fig. 12

Fig. 13

~ 9a

Fig. 14

~ 9a

Fig. 15

~ 9a

Fig. 16

Fig. 17

Fig. 18

Fig. 19

9a

Fig. 20

9a

Fig. 21

9b

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

Fig. 38

Fig. 39

Fig. 40

Fig. 41

Fig. 42

Fig. 43

18 —

17

16 —

14 —

13

12 —

9a, 9b —

11

10 —

# Fig. 44

Fig. 45

Fig. 46

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1662808 A1
- EP 1566683 A1